# EUROPÄISCHE PATENTANMELDUNG

(11) **EP 1 524 615 A1**
(43) Veröffentlichungstag der Anmeldung: **20.04.2005**
(21) Anmeldenummer: 03023551.9
(22) Anmeldetag: 15.10.2003
(51) Int. Cl.: G06F 17/60

(54) **Auftragssteuerungssystem und Verfahren zur Steuerung einer Auftragsbearbeitung**

(71) Anmelder: SIEMENS AKTIENGESELLSCHAFT, 80333 München (DE)
(72) Erfinder: Die Erfindernennung liegt noch nicht vor

(57) **Zusammenfassung**

Zur Steuerung einer Auftragsbearbeitung wird bei einer Auftragsbearbeitungsanforderung einer ersten Einheit anhand von Steuerungsparametern für eine Auftragsbearbeitung durch zumindest eine zweite Einheit eine Auftragsinformation zu einem von der zweiten Einheit zu bearbeitenden Auftrag erzeugt. Die Auftragsinformation wird in einem Auftragsspeicher für die zweite Einheit abrufbar bereit gestellt. Die Auftragsinformation umfaßt zumindest einen Aufgabendeskriptor, einen Ereignis- und/oder Statusindikator, einen vorgegebenen Erledigungszeitpunkt und eine Angabe über dem zu bearbeitenden Auftrag zugeordnete Ressourcen. Veränderungen des Ereignisund/oder Statusindikators werden fortlaufend protokolliert.

## Beschreibung

Ein vernetztes Auftragssteuerungssystem ermöglicht sowohl eine automatische als auch eine manuelle Auftragsvergabe zwischen Standorten einer Unternehmenseinheit, Abteilung oder Gruppe. Neben einer starken Reduzierung des Papierflusses bietet ein vernetztes Auftragssteuerungssystem zusätzliche Vorteile. Beispielsweise wird die Dauer einer Auftragsübermittlung minimiert.

Der vorliegenden Erfindung liegt die Aufgabe zugrunde, ein effizientes Verfahren zur Steuerung einer Auftragsbearbeitung sowie ein zur Durchführung des Verfahrens geeignetes Auftragssteuerungssystem anzugeben.

Diese Aufgabe wird erfindungsgemäß durch ein Verfahren mit den in Anspruch 1 angegebenen Merkmalen und ein Auftragssteuerungssystem mit den in Anspruch 8 angegebenen Merkmalen gelöst. Vorteilhafte Weiterbildungen der vorliegenden Erfindung sind in den abhängigen Ansprüchen angegeben.

Erfindungsgemäß wird bei einer Auftragsbearbeitungsanforderung einer ersten Einheit anhand von Steuerungsparametern für eine Auftragsbearbeitung durch zumindest eine zweite Einheit eine Auftragsinformation zu einem von der zweiten Einheit zu bearbeitenden Auftrag erzeugt. Die Auftragsinformation wird dann in einem Auftragsspeicher für die zweite Einheit abrufbar bereit gestellt. Die Auftragsinformation umfaßt zumindest einen Aufgabendeskriptor, einen Ereignis- bzw. Statusindikator, einen vorgegebenen Erledigungszeitpunkt und eine Angabe über dem zu bearbeitenden Auftrag zugeordnete Ressourcen. Veränderungen des Ereignis- und/oder Statusindikators werden fortlaufend protokolliert. Hierdurch ergibt sich eine besonders effiziente Steuerung einer Auftragsbearbeitung, die insbesondere eine vergleichsweise geringe Ressourcenbeanspruchung in Kommunikationsnetzwerken und Datenverarbeitungsanlagen ermöglicht.

Die Angabe über dem zu bearbeitenden Auftrag zugeordnete Ressourcen kann beispielsweise einen Bearbeiter bzw. Aktenstandort bezeichnen.

Vorteilhafterweise werden im Auftragsspeicher bereit gestellte Auftragsinformationen zusätzlich für die erste Einheit verfügbar gemacht. Im Auftragsspeicher gespeicherte Auftragsinformationen können dabei nach zu ersten bzw. zweiten Einheiten zugeordneten Organisationseinheiten bzw. Standorten gegliedert sein.

Entsprechend einer bevorzugten Ausgestaltung der vorliegenden Erfindung sind die Steuerungsparameter in einer Parameterdatei für Zusammenarbeitsvereinbarungen abgespeichert.

Bevorzugt werden protokollierte Veränderungen des Ereignis- bzw. Statusindikators für die erste bzw. zweite Einheit abrufbar bereitgestellt. Die protokollierten Veränderungen des Ereignis- bzw. Statusindikators werden vorteilhafterweise im Auftragsspeicher bereitgestellt.

Ein erfindungsgemäßes Auftragssteuerungssystem umfaßt eine Einrichtung zur Erzeugung einer Auftragsinformation - bei einer Auftragsbearbeitungsanforderung einer ersten Einheit - zu einem von einer zweiten Einheit zu bearbeitenden Auftrag anhand von Steuerungsparametern für eine Auftragsbearbeitung durch die zweite Einheit. Außerdem ist eine Einrichtung zur abrufbaren Bereitstellung der Auftragsinformation in einem Auftragsspeicher für die zweite Einheit vorgesehen. Die Auftragsinformation umfaßt zumindest einen Aufgabendeskriptor, einen Ereignis- bzw. Statusindikator, einen vorgegebenen Erledigungszeitpunkt und eine Angabe über dem zu bearbeitenden Auftrag zugeordnete Ressourcen. Des weiteren weist ein erfindungsgemäßes Auftragssteuerungssystem eine Einheit zur fortlaufenden Protokollierung von Veränderungen des Ereignis- bzw. Statusindikators auf.

Die vorliegende Erfindung wird nachfolgend an einem Ausführungsbeispiel anhand der Zeichnung näher erläutert. Es zeigt
- Figur 1a: ein Ablaufdiagramm zur Suche eines Auftrags
- Figur 1b: eine Auftragssuchmaske eines zur Durchführung eines Verfahrens zur Steuerung einer Auftragsbearbeitung geeigneten Auftragssteuerungssystems,
- Figur 2: eine Bildschirmmaske des Auftragssteuerungssystems mit einer Auftragsliste,
- Figur 3: eine Bildschirmmaske mit einer freien Ergebnisliste,
- Figur 4: eine Bildschirmmaske mit einer Auftragsansicht,
- Figur 5a: ein Ablaufdiagramm zur Erstellung eines Auftrags,
- Figur 5b: eine Bildschirmmaske zur Erstellung eines Auftrags über die Auftragsansicht,
- Figur 6: eine Bildschirmmaske zur Erstellung eines neuen Auftrags über das Auftragssteuerungssystem,
- Figur 7: eine erste von drei Sichten einer Bildschirmmaske zur Auftragserstellung,
- Figur 8: eine zweite Sicht einer Bildschirmmaske zur Auftragserstellung,
- Figur 9: eine dritte Sicht einer Bildschirmmaske zur Auftragserstellung,
- Figur 10: eine Bildschirmmaske mit einem Hinweis auf einen vorliegenden Bearbeitungsauftrag,
- Figur 11a: ein Ablaufdiagramm zum Löschen eines Auftrags,
- Figur 11b: eine Bildschirmmaske zum Löschen eines Auftrags,
- Figur 12a: ein Ablaufdiagramm zur Bestätigung eines Auftrags,
- Figur 12b: eine Bildschirmmaske zur Bestätigung eines Auftrags,
- Figur 13: eine Bildschirmmaske zur Änderung eines Bearbeiters einer Akte,
- Figur 14: eine Bildschirmmaske zur Änderung eines Bearbeiters einer übergeordneten Akte,
- Figur 15: eine Bildschirmmaske zur Änderung eines Bearbeiters einer untergeordneten Akte,
- Figur 16: eine Bildschirmmaske zur Änderung eines Aktenstatus,
- Figur 17a: ein Ablaufdiagramm zur Weiterleitung eines Auftrags,
- Figur 17b: eine Bildschirmmaske zur Weiterleitung eines Auftrags,
- Figur 18a: ein Ablaufdiagramm zur Editierung eines Auftrags,
- Figur 18b: eine Bildschirmmaske zur Editierung eines Auftrags,
- Figur 19a: ein Ablaufdiagramm zur Bestätigung eines Auftrags als fertiggestellt,
- Figur 19b: eine Bildschirmmaske zur Bestätigung eines Auftrags als fertiggestellt,
- Figur 20: eine Bildschirmmaske zur Kennzeichnung eines fertiggestellten Auftrags,
- Figur 21a: ein Ablaufdiagramm zur Erstellung einer Auftragsliste über eine Baumstruktur,
- Figur 21b: eine Bildschirmmaske für eine Auftragsliste in Baumstruktur,
- Figur 22: eine Bildschirmmaske für eine aktenbezogene Auftragsliste.

Die vorliegende Erfindung wird ohne Beschränkung der Allgemeinheit in einem Anwendungsumfeld für ein vernetztes Auftragssteuerungssystem einer international tätigen Patentverwaltung eines Unternehmens erläutert.

Eine Organisationseinheit mit auftragnehmender Rolle wird mittels einer einem Posteingangskorb vergleichbaren Funktion über neue Aufträge informiert. Dadurch ist schnell erkennbar, welche Einheit gerade an welchem Auftrag arbeitet, oder in welchem Status sich beispielsweise ein Auftrag oder eine zu bearbeitende Akte gerade befindet. Zusätzlich kann die Historie einer Auftragsvergabe in einer speziellen Datenansicht verfolgt werden.

Je nach Aufgabe können Pflichtfelder eines Datensatzes bzw. relevanter Dokumente, die vom Auftraggeber auszufüllen bzw. zu erstellen sind, automatisch angezeigt werden. Eine Organisationseinheit mit auftraggebender Rolle sollte sämtliche erforderliche Informationen eingeben, da der Auftrag ansonsten zunächst nicht vergeben werden kann. Die Vollständigkeit des zu vergebenden Auftrags wird vom Auftragssteuerungssystem durch Überprüfung sichergestellt, ob sämtliche Pflichtangaben und -unterlagen vorhanden sind.

Mittels der automatischen Auftragssteuerung, indem Zusammenarbeitsvereinbarungen zwischen den einzelnen Organisationseinheiten des Unternehmens im Auftragssteuerungssystem hinterlegt werden, ist es möglich, dass bestimmte Aufträge nicht mehr manuell vergeben werden müssen, sondern an das Auftragssteuerungssystem übermittelt die jeweiligen Aufträge automatisch an die zuständigen Organisationseinheiten, die den Auftrag bearbeiten.

Wenn die auftragnehmende Organisationseinheit den Auftrag annimmt, werden die notwendigen Sichten zur Bearbeitung erzeugt, bzw. kann der Auftragnehmer hier den jeweiligen Bearbeiter ändern.

Folgende Aufgaben können über das Auftragssteuerungssystem abgewickelt werden:
- Inanspruchnahme einer Erfindungsmeldung,
- Patentanmeldung ausarbeiten und einreichen,
- Entwurf einer Erstanmeldung,
- Nachanmeldung,
- Behandlung von EPÜ- und PCT-Anmeldungen in der nationalen Phase,
- Aktenübernahme und -übergabe,
- interne Auftragsvergabe,
- Bestellung von Prioritätsbelegen,
- Anfragen eines kostenverantwortlichen Bearbeiters,
- PCT-Prüfungsantrag,
- Aufrechterhaltung von Schutzrechten.

Für ausgesuchte auftragnehmende Organisationseinheiten können im Auftragssteuerungssystem vom Auftraggeber individuelle Fristen vergeben werden, innerhalb derer ein Auftrag zu bearbeitet werden ist. Pro Aufgabe innerhalb des Auftragssteuerungssystems wird in Stammdatentabellen zur Fristensteuerung definiert, welche Fristen für die entsprechende Aufgabe ausgelöst werden.

Mit dem Auftragssteuerungssystem kann ein neuer Auftrag erstellt werden. Dieser Auftrag wird an die auftragnehmende Organisationseinheit automatisch oder manuell versendet. Der aktuelle Status des vergebenen Auftrags kann durch die entsprechende farbliche Hinterlegung im Posteingangskorb der jeweiligen auftragnehmenden Organisationseinheit verfolgt werden.

Des weiteren ist in jeder Akte, für die ein Auftrag innerhalb des Auftragssteuerungssystems vergeben wurde, solange dieser noch nicht bestätigt wurde, ein entsprechende Markierung ersichtlich.

Nimmt der auftragnehmende Organisationseinheit den Auftrag zur Bearbeitung an, muss sie dies bestätigen. Solange der Auftrag noch nicht vom Auftragnehmer angenommen, d.h. bestätigt wurde, kann der Auftragnehmer den Auftrag noch löschen.

Es ist auch möglich, dass der Auftragnehmer den Auftrag an eine andere zuständige Organisationseinheit weiterleitet bzw. den Auftrag mangels Zuständigkeit an den Auftraggeber zurücksendet.

Mit der Auftragssuche können die Aufträge über eine Suchmaske nach bestimmten Kriterien ausgewählt und daraus eine Auftragsliste erstellt werden. Eine Auftragsliste kann auch direkt aus einem Baum in einer Navigationsleiste generiert werden, und alle Auftragslisten sind auch ausdruckbar. Daneben besteht die Möglichkeit, bereits verwendete Suchmuster zu speichern und wieder aufzurufen. Alle Aufträge einer bestimmten Akte werden außerdem in einer speziellen Bildschirmmaske angezeigt. Die entsprechenden Trefferlisten können in gängige Büroanwendungsprogramme wie Excel exportiert werden.

Die nachstehende Tabelle gibt eine Übersicht über mögliche Anwendungsfälle des Auftragssteuerungssystems wieder.

| Nr. | Bezeichnung | Beschreibung |
|---|---|---|
| a | Auftrag suchen | Die Auftragssuche ist nach verschiedenen Kriterien möglich (u.a. Standorte von Auftraggeber, Auftragnehmer, Bearbeiter, Aktenzeichen, Kostenstelle). |
| b | Suchmuster speichern | Falls öfters nach denselben Kriterien gesucht wird, besteht die Möglichkeit, dieses Suchmuster abzuspeichern. |
| c | Suchmuster aufrufen | Abgespeicherte Suchmuster können jeder zeit zur neuerlichen Suche aufgerufen werden. |
| d | Auftrag anzeigen | Es werden nur jene Aufträge anzeigt, die allen ausgewählten Suchkriterien entsprechen. |
| e | Auftrag erstellen | Über die Sicht "Aufträge" in einer Akte wird vom Auftraggeber für einen bestimmten auftragnehmenden Standort ein Auftrag erstellt und abgesendet. |
| f | Auftrag löschen | Nach der Auftragsvergabe kann der Auftraggeber den versendeten Auftrag noch löschen, solange der Auftragnehmer diesen Auftrag noch nicht angenommen, d.h. bestätigt, hat. |
| g | Auftrag bestätigen | Übernimmt der Auftragnehmer den Auftrag zur weiteren Bearbeitung muss er die Auftragsannahme bestätigen. Durch die gelbe Anzeige des Ampelsystems wird signalisiert, dass der Auftrag im Zustand der Bearbeitung ist. Nach Auftragsannahme ist es auch möglich die Bearbeiter zu ändern. |
| h | Auftrag weiterleiten | Der Auftragnehmer kann den Auftrag bei mangelnder Zuständigkeit seiner Person/Abteilung auch weiterleiten, bzw. an den Auftraggeber zurücksenden. |
| i | Auftrag editieren | Dem Auftragnehmer ist es auch möglich, den Auftrag bei Bedarf zu ändern. |
| j | Auftrag als fertig bearbeitet bestätigen | Der zuständige Auftragnehmer meldet dem ursprünglichen Auftraggeber die Beendigung der Auftragsbearbeitung bzw. durch im Auftragssteuerungssystem hinterlegte Erledigungstrigger wird eine Aufgabe automatisch als erledigt gekennzeichnet. |
| k | Auftrag drucken | Es ist möglich, den Auftrag aus der jeweiligen Sicht drucken zu können. |
| l.a | Auftragsliste erstellen über Suchmaske | Die Auftragsliste kann über eine Auftragssuche nach verschiedenen Kriterien erstellt werden (u.a. Standorte von Auftraggeber, Auftragnehmer, Bearbeiter, Aktenzeichen, Kostenstelle). |
| l.b | Auftragsliste erstellen über Baum | Die Auftragsliste kann auch über den Baum in der Navigationsleiste erstellt werden, d.h. hier wählt man aus allen Aufträgen einer Akte, geordnet nach zuständigen Standorten, die gewünschten Aufträge aus. |
| l.c | Auftragsliste erstellen über Sicht "Outfarmaufträge" | Die Auftragsliste kann über eine komplette Übersicht aller in der Sicht "Outfarmaufträge" angezeigten Aufträge des Auftragssteuerungssystems einer Akte erstellt werden. |
| m | Auftragsliste drucken | Die über die Suchmaske bzw. über den Baum erstellten Auftragslisten können ausgedruckt werden. |
| n | alle Aufträge einer Akte anzeigen | Eine komplette Übersicht aller erstellten Aufträge innerhalb des Auftragssteuerungssystems einer Akte sind in der Sicht "Outfarmaufträge" angezeigt. |
| o | Öffnen Posteingangskorb | Der Posteingangskorb kann auch über den Baum in der Navigationsleiste geöffnet werden. |

Für nachfolgende Erläuterungen werden Modellelemente erweiterter ereignisgesteuerter Prozeßketten verwendet werden.

Ein Ereignis beschreibt ein Eintreten bzw. Eingetreten-Sein eines Zustands, der Funktionen auslösen kann.

Eine Funktion beschreibt eine Verrichtung an bzw. Transformation von Objekten, wie Informationen oder Personen, im Hinblick auf eine Zielsetzung.

Konnektoren stellen sachlogische Verknüpfung im Sinne einer Prozessverzweigung oder Zusammenführung. Es wird unterschieden zwischen
- Konjunktion (UND),
- Adjunktion (ODER bzw. UND/ODER),
- Disjunktion (EXKLUSIVES ODER, XOR).

Kanten beschreiben Verbindungen von Modellelementen zur Beschreibung eines Kontrollflusses dar.

Eine Prozessschnittstelle stellt einen Verweis auf Fortsetzung des Geschäftsprozessmodells in einem anderen Geschäftsprozessmodell dar.

Eine Organisationseinheit bildet eine Verbindung zu Funktionen ab, beispielsweise die Zuständigkeit für die Ausführung einer Funktion.

Nachfolgend werden einige bei der weiteren Beschreibung der Ausführungsbeispiele häufig verwendete Begriffe näher erläutert.

### AMPELSYSTEM

Eine Ampelanzeige im Posteingangskorb eines Standorts informiert sowohl Auftraggeber als auch Auftragnehmer über den derzeitigen Status eines vergebenen Auftrags. Hat der auftragsnehmende Standort den Auftrag erhalten und noch nicht bestätigt, wird der Auftrag rot hinterlegt, nach der Auftragsbestätigung, d.h. während der Bearbeitung des Auftrags durch den zugewiesenen Standort erscheint der Auftrag gelb. Ist der Auftrag abgeschlossen und die diesbezügliche Rückmeldung an den Auftraggeber erfolgt, wird der Auftrag grün hinterlegt.

### AUFTRAG

Ein Auftraggeber erteilt einem Auftragnehmer einen Auftrag, also eine Aufgabe, die von diesem auftragnehmenden Standort zu erledigen ist. Dieser Auftrag ist die Voraussetzung, dass ein bzw. mehrere neue/r Prozess/e gestartet wird/werden, durch die eventuell weitere Aufträge entstehen bzw. Prozesse ausgelöst werden. Ein Auftrag ist gekennzeichnet durch die Aufgabe, den Auftraggeber und -nehmer, Daten bzgl. Beginn und Ende des Auftragsbearbeitungsprozesses bzw. bestimmte Bearbeitungsfristen.

### AUTOMATISCHER AUFTRAG

Ein automatischer Auftrag wird durch das Auslösen bestimmter Trigger (siehe unten) erstellt. Je nach ausgelöstem Trigger wird ein Auftrag von einem integrierten Patent-Anwendungsprogramm-System (IPAS) als Teil des Auftragssteuerungssystems (IIPN - international intellectual property network) automatisch erstellt und an einen bestimmten, auftragsnehmenden Standort weitergeleitet, welcher - aufgrund zuvor definierter Zuständigkeiten/Merkmale und dem Vorliegen einer Zusammenarbeitsvereinbarung - in weiterer Folge für die Bearbeitung des Auftrags zuständig ist.

### AUFTRAGGEBER

Der Auftraggeber setzt Zuständigkeiten, Fristen etc. für den von ihm erteilten Auftrag und dessen Bearbeitung fest, und stellt die dazu nötigen Dokumente zur Verfügung. Unter Auftraggeber werden alle Mitarbeiter des auftraggebenden Standorts verstanden.

Für das Nachanmelde- und PCT-Verfahren gilt, dass der Auftraggeber ausschließlich in der entsprechenden Familie arbeitet.

### AUFTRAGSEINGANG

Wurde ein Auftrag erstellt und an einen auftragnehmenden Standort versendet, trifft dieser Auftrag im Posteingangskorb des Auftragnehmers ein. Solange dieser Auftrag von Auftragnehmer nicht bestätigt wird, ist er rot hinterlegt. Somit ist ein Auftragseingang gleich für den Auftragnehmer ersichtlich.

### AUFTRAGNEHMER

Der Auftragnehmer ist ein Standort bzw. eine Abteilung, wo eine Zusammenarbeitsvereinbarung mit dem Auftraggeber vorliegt. In Abhängigkeit von festgelegten Triggern wird eine automatische Auftragsvergabe generiert. Vom jeweiligen Trigger ist abhängig, welchem Standort schließlich ein Auftrag zugewiesen wird.

Als Auftragnehmer gelten alle Mitarbeiter des jeweiligen Standorts/Abteilung, und nur diese Mitarbeiter sind berechtigt, Bestätigungen bzgl. Auftragsannahme o.ä. zu erteilen.

Für das Nachanmelde- und PCT-Verfahren gilt, dass der Auftragsnehmer ausschließlich in der entsprechenden Akte arbeitet.

### AUTOMATISCHE AUFTRAGSVERGABE UND -STEUERUNG

In Abhängigkeit von festgelegten Triggern und dem Vorliegen einer Zusammenarbeits-vereinbarung wird eine automatische Auftragsvergabe/-steuerung generiert. Trigger können Buttons, Vorlagen oder bestimmte Dateitypen sein. Die Automatische Auftragsvergabe im Internationalen Auftragsmanagement erfolgt gemäß einer vorher definierter Tabelle.

### MANUELLE AUFTRAGSVERGABE

Gibt es keine Trigger, damit ein Auftrag automatisch vergeben wird, werden die Aufträge manuell erstellt, d.h. der Auftragnehmer muss den Prozess "Auftrag erstellen" abarbeiten und an einen auftragnehmenden Standort versenden.

### HISTORIE DER AUFTRAGSVERGABE

Die Historie der über das Internationale Auftragsmanagement abgewickelten Aufträge ist in einer entsprechenden Sicht in der Akte und in der Familie dargestellt. Jede Weiterleitung, Bestätigung, Änderung oder Löschung etc. werden ebenfalls erfasst.

### INTERNE LEISTUNGSVERRECHNUNG

Die internen Verrechnungskosten die durch einen Auftrag entstehen, werden nach einem bestimmten Schlüssel (prozentuelle Aufteilung) auf verschiedene Organisationseinheiten (IPD - intellectual property department) übertragen.

Die Anteile des Auftrags werden im Auftrag hinterlegt. Die Eingabe der Anteile erfolgt durch den auftraggebenden Standort, eine Änderung der Anteile darf durch jeden berechtigten IIPN-User erfolgen. Die Anteile sind jedoch nur bis zur Fertigstellung des Auftrags möglich.

### POSTEINGANGSKORB

In den Posteingangskorb des Auftragsnehmers gelangen alle vom Auftraggeber erteilten Aufträge, die zu bestätigen sind. Die Übersicht dieser Aufträge ist als Tabelle dargestellt, wo der Status der Akte (siehe Ampelsystem), die Aufgabe, das Aktenzeichen (dient als Link zur Auftragsansicht), das Auftragsund Fertigstellungsdatum (inkl. Button "fertiggestellt") ersichtlich sind.

### ZUSAMMENARBEITSVEREINBARUNGEN

Durch Zusammenarbeitsvereinbarungen werden die Zuständigkeiten zwischen auftraggebenden und auftragnehmenden Standorten geregelt. Nur wenn eine Zusammenarbeitsvereinbarung vorliegt, kann ein Auftrag auch automatisch vergeben werden.

Hierbei besteht die Möglichkeit, die Dauer dieser Zusammenarbeit mittels einer Datumseingabe in der zugehörigen Stammdatenmaske zeitlich einzugrenzen. Die Zusammenarbeitsvereinbarung kann auch auf bestimmte Verfahren oder Länder beschränkt werden.

### BESCHREIBUNG KONKRETER ANWENDUNGSFÄLLE

### AUFTRAG SUCHEN

Aufträge können nach folgenden Suchkriterien gesucht werden:
- Auftragseingangs-Standort (IPD)
- Auftragsvergabe-Standort
- Abteilung des Bearbeiters (PIV) der Akte bzw. des Bearbeiters zum Zeitpunkt der Auftragsvergabe
- PIV der Akte bzw. PIV Auftrag (=PIV zum Zeitpunkt der Auftragsvergabe)
- Internes Aktenzeichen
- kostenverantwortlicher Bearbeiter (FAPP)
- FAPP Abteilung
- FAPP Standort
- Kostentragenstelle (BKZ)
- Auftragsdatum
- Auftrag bestätigt ja/nein
- Aufgabe
- Auftrag fertiggestellt ja/nein
- International Service Charges (Interne Leistungsverrechnung): Kästchen zum Ankreuzen (wenn ja)

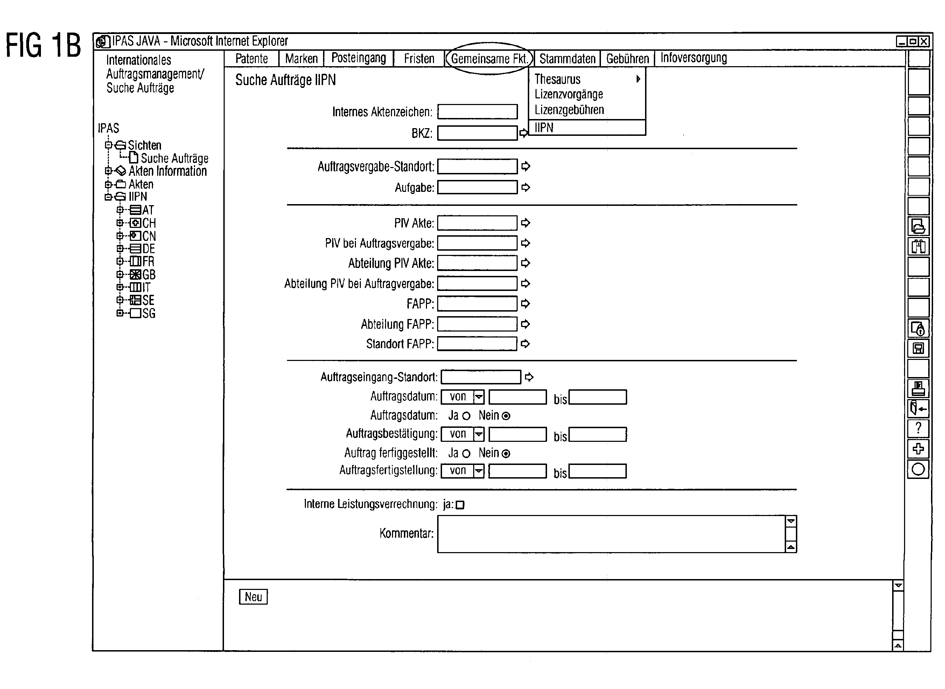

Die Auftragsliste, welche über die Suchmaske generiert wird, ist als freie Ergebnisliste gestaltbar, wo die Spalten je nach Bedarf vom User frei wählbar sind. So können auf Wunsch auch alle Suchfelder in der Ergebnisliste angezeigt werden. Standardanzeige bleibt aber jene, welche im Screenshot (Figur 1b) ersichtlich ist. Die Auftragsliste, die in der Sicht "Aufträge" in der Akte ersichtlich ist, ist keine freie Ergebnisliste.

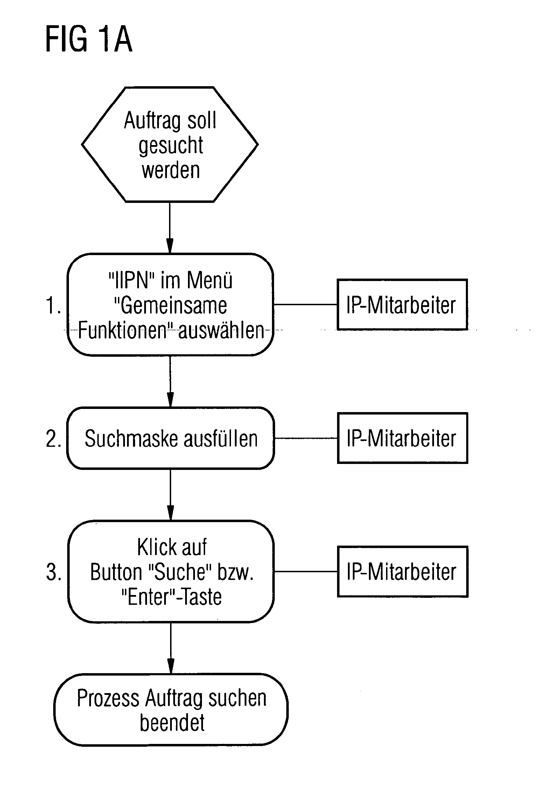

Will man einen Auftrag des IIPN suchen, wählt man zuerst "IIPN" im Menü "Gemeinsame Funktionen" aus (Figur 1a). Hier kann man in der Suchmaske die gewünschten Suchkriterien auswählen und Daten eingeben. Nach dem Klick auf den Button "Suchen" (Fernglas) bzw. Enter-Taste) in der rechten Buttonleiste ist die Auftragssuche beendet: siehe Prozess "Auftrag anzeigen". Ergebnislisten (Posteingangskorb) können auch über den Baum aufgerufen werden.

### SUCHMUSTER SPEICHERN

Voraussetzung ist der vorherige Ablauf des Prozesses "Auftrag suchen". Alle im Prozess "Auftrag suchen" gewählten Suchmuster können mittels Klick auf den Button "Suchmuster speichern" (Disketten-Symbol) in der rechten Buttonleiste für weitere Nutzungen gespeichert werden.

### AUFTRAG ANZEIGEN

Voraussetzung ist, daß die Ergebnisliste der Aufträge des IIPN geöffnet ist. Ein darauf aufscheinender Auftrag wird ausgesucht. Vorangehende Prozesse sind: "Auftrag suchen" bzw. "Auftragsliste erstellen"

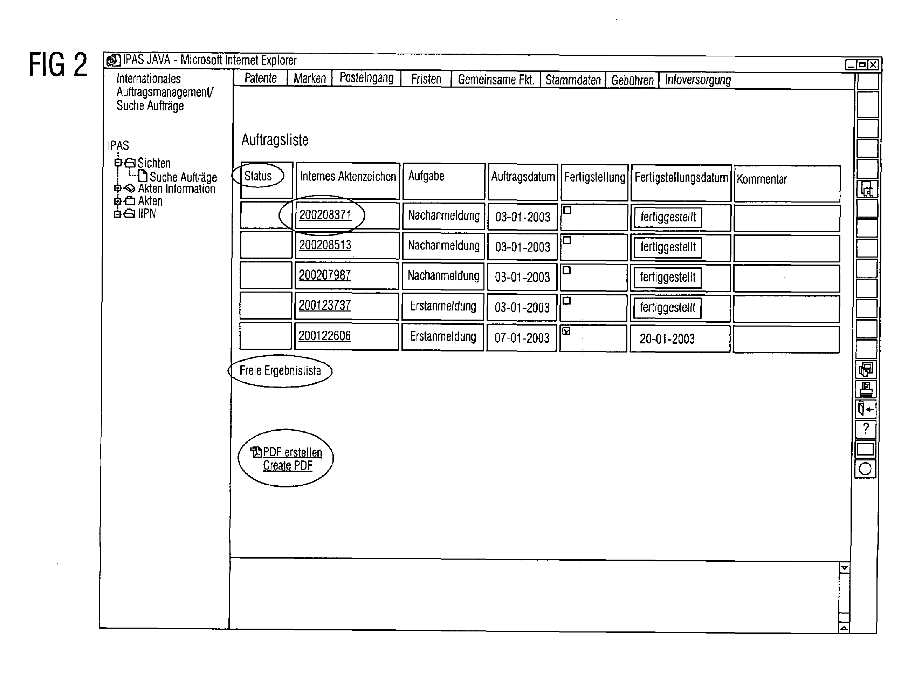

Nachdem der Prozess "Auftrag suchen" bzw. "Auftragsliste erstellen" abgeschlossen ist, erscheint eine Tabellenübersicht mit allen Aufträgen, die genau den eingegebenen Suchkriterien entsprechen (siehe Figur 2). Diese Aufträge sind nach dem Status sortierbar. Aus dieser Übersicht können einzelne Aufträge zur näheren Betrachtung (Ansicht) ausgewählt werden (Aktenzeichen = Link zum jeweiligen Auftrag), bzw. kann aus dieser Auftragsliste ein druckbares pdf-File generiert werden.

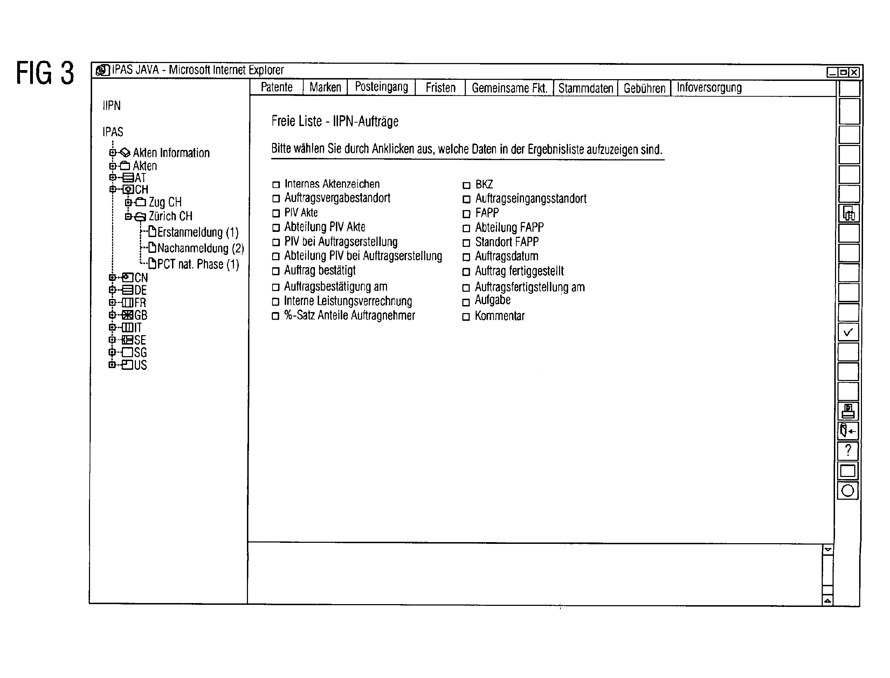

Die Auftragsliste ist eine "Freie Ergebnisliste", d.h. es kann zu jedem gewünschten Suchkriterium eine Ergebnisspalte angezeigt werden (Auswahl der Spalten, siehe Figur 3)

Wird die Auftragsliste über den Baum generiert, wird die Spalte "Fertigstellung" (festgeschrieben, grau hinterlegt) nicht angezeigt. Nach Ansicht des gewählten Auftrags bestehen die Möglichkeiten den Auftrag zu bestätigen, zu löschen, weiterzuleiten bzw. zu editieren.

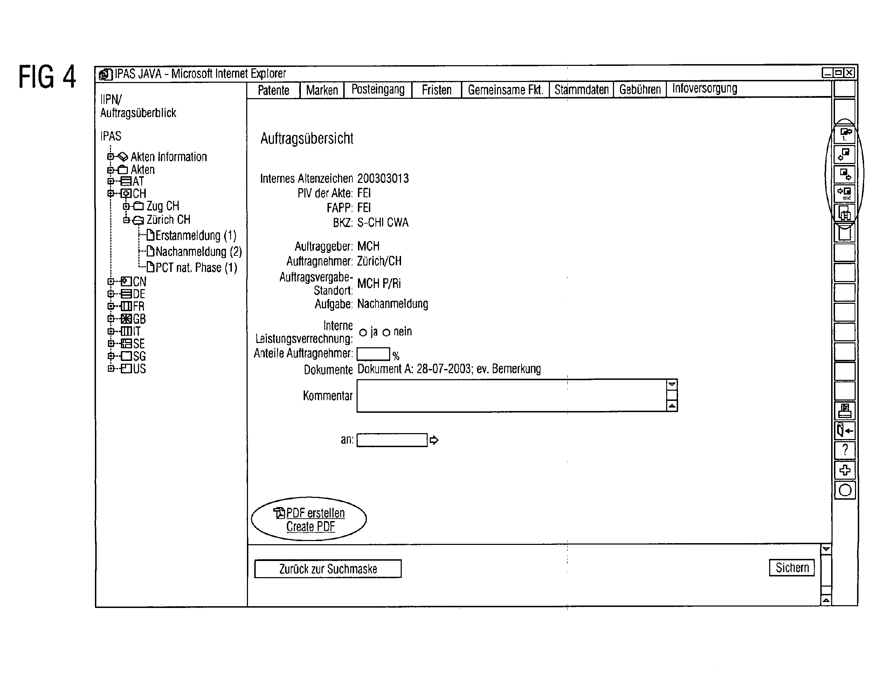

Die über die Suchfunktion generierte Auftragsliste ist eine "Freie Ergebnisliste", d.h. zu jedem Suchkriterium ist eine Ergebnisspalte anzeigbar (Figur 3). Die Auswahl dieser Spalten erfolgt in der oben dargestellten Maske "Freie Liste IIPN-Aufträge". In der Ansicht des ausgewählten Auftrags (auch als pdf-Dokument druckbar) entsprechend Figur 4 steht das Icon "Zurück zur Ergebnisliste" zur Verfügung.

### AUFTRAG ERSTELLEN

Der Auftraggeber erstellt einen neuen Auftrag für eine bestimmte Akte im IIPN (unter Menüpunkt "Gemeinsame Funktionen"), oder wahlweise über die Sicht "Aufträge" in einer Familien-Akte (interne Aufträge). Der Auftrag hängt zwar an einer Länderakte, die Sicht Aufträge ist aber nur in der Familie sichtbar. Erst nach dem Ausfüllen aller Mussfelder, und wenn alle Dokumente für diesen Auftrag erstellt wurden (d.h. entweder in der Sicht Dokumentenverwaltung Familie bzw. Landakte vorhanden sind), kann der Auftrag einem auftragnehmenden Standort übermittelt werden. Wenn mit bestimmten Standorten eine Zusammenarbeitsvereinbarung für den jeweiligen Sachverhalt vorliegt, wird der Auftragnehmer automatisch vorgeschlagen, ansonsten wird der Auftragnehmer manuell zugeordnet.

Der Auftrag kann solange nicht versendet werden, bis alle Mussfelder belegt wurden bzw. Dokumente vorhanden sind. Welche Felder/Dokumente Mussfelder bzw. -dokumente sind, wird über eine Stammdatentabelle sowie Plausibilitäten (Akte und Familie) codiert. Erst bei hundertprozentiger Vollständigkeit der Muss-Angaben kann der Auftrag versendet werden (Klick auf Button "Absenden).

Im Baum in der Navigationsleiste werden alle Aufträge nach Standorten und Aufgaben geordnet aufgelistet. Dieser Baum ist in jeder Sicht in IPAS ersichtlich. Der jeweilige Bearbeitungsstand, und -standort, der Akte sind im Posteingang jedes Standorts ersichtlich. Ist bei einem Standort in dessen Posteingangskorb ein Auftrag rot unterlegt, bedeutet dies, dass diesem Standort ein neuer Auftrag zugewiesen wurden, dessen Annahme er aber noch nicht bestätigt hat. Gelbe Färbung des Auftrags sagt aus, dass dieser Auftrag zur Bearbeitung übernommen und daher bestätigt wurde, und grüne Färbung, dass dieser Auftrag von dem jeweiligen Standort fertiggestellt und als erledigt bestätigt wurde.

Außerdem wird neben der Standortbezeichnung im Baum der Navigationsleiste die Anzahl aller noch nicht bestätigten Aufträge des Standorts bzw. auch pro Aufgabe (Zahl fett, in Klammer) angezeigt, um einen groben Überblick zu geben, wie viele offene Aufträge vorliegen.

Auslösendes Ereignis ist, daß die Akte von anderen IPDs weiterbearbeitet werden muss. Daher ist Erstellung eines Auftrags für diese Auftragnehmer notwendig (Button "Neu").

Nachfolgend wird das Beispiel einer Erstanmeldung betrachtet. Ein Standort in Deutschland ist arbeitsmäßig zur Zeit überlastet und möchte daher eine Erstanmeldung an den Standort in Großbritannien übertragen.

Dazu legt eine dem FAPP zugeordnete Verwaltungskraft (VWA) die Familie und die Akte für die Erstanmeldung an, und erzeugt im IIPN einen Auftrag für den Standort in Großbritannien, indem sie den Auftragnehmer festlegt, die auftragsspezifischen Mussfelder ausfüllt (hier z.B. das Feld "Liefertermin", also wann der GB-Standort den Auftrag erledigt haben muss) usw., und sendet den Auftrag ab. Mit dem Absenden wird eine automatische Rückläuferfrist erteilt, innerhalb derer die Auftragsannahme bestätigt werden muss.

Die britische VWA sieht im Posteingangskorb ihres Standorts, dass ein neuer, noch nicht bestätigter Auftrag für eine Erstanmeldung vorliegt (rot markiert), und wird in weiterer Folge diesen Auftrag annehmen oder an einen anderen Standort weiterleiten.

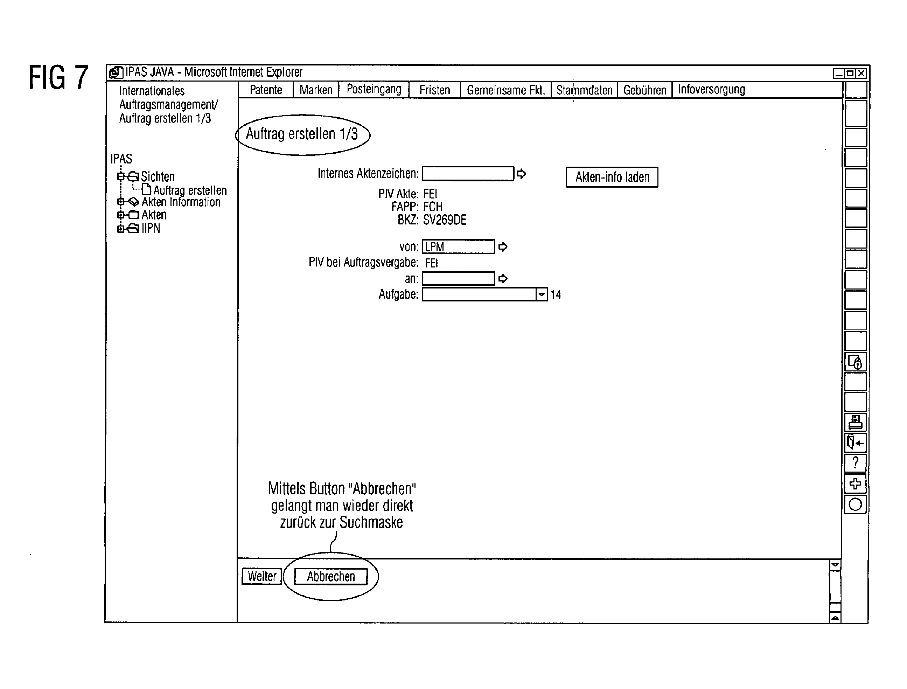

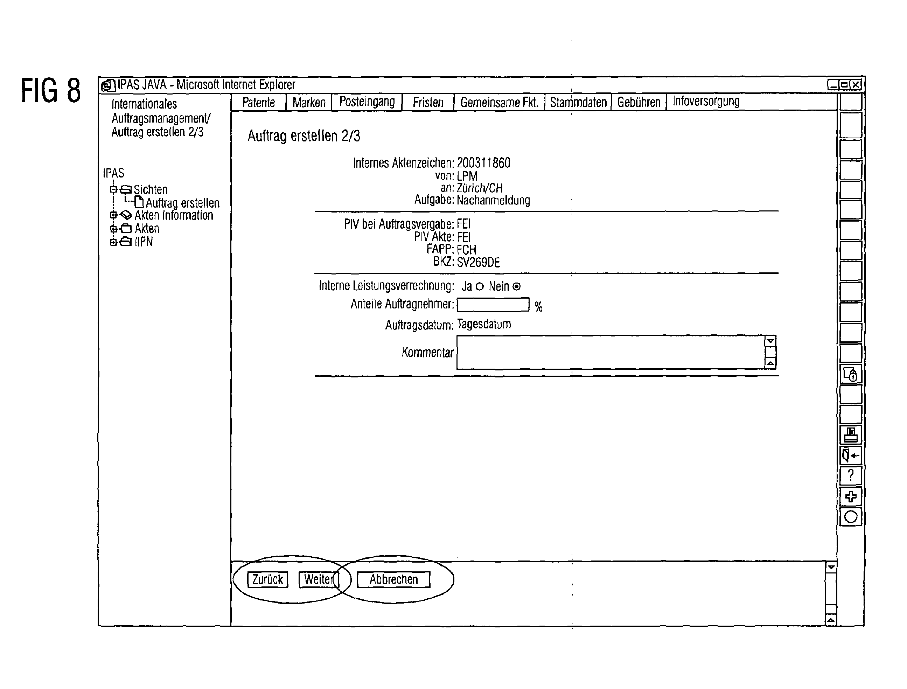

Der Verfahrenablauf lässt sich folgendermaßen gliedern:
- Im Menü "Internationales Auftragsmanagement" unter "Gemeinsame Funktionen" gelangt man auf die IPAS-Suchmaske für das Internationale Auftragsmanagement (IIPN)
- Über die Sicht "Aufträge" in einer Familienakte kann man ebenfalls über den Button "Neu" einen Auftrag des IIPN erstellen (interner Auftrag). Nach dem Klick auf den Button "Neu" erscheint die Sicht 1/3 der IIPN-Auftragserstellung (Figur 7). Hier ist das interne Aktenzeichen bereits mit dem Familienaktenzeichen vorbelegt.
- Mittels Klick auf den Button "NEU" startet die Erfassung des neuen Auftrags. Je nach Aufgabe müssen diverse Mussfelder belegt werden bzw. Dokumente erstellt werden. Wichtig sind vor allem folgende Daten:
   - Zuständigkeiten und Aufgabe (Sicht 1 von 3)
   - Auftraggeber (vorgegeben aktuell eingeloggter User; ist aber über weisses Eingabefeld blauen Pfeil änderbar)
   - Auftragnehmer: hier stehen über den blauen Pfeil nur Standorte (IPDs) zur Auswahl
   - int. AKZ (über Datenfeld bzw. blauen Pfeil zu ändern): das interne Aktenzeichen kann das Familienaktenzeichen sein, ist aber üblicherweise das Länderaktenzeichen
   - Aufgabe - kann über Dropdown-Feld vergeben werden
- Damit die Daten einer Akte zur Verfügung stehen (PIV, BKZ usw.), wird die Akte für das angegebene Aktenzeichen über den Button "Akteninformationen laden" geladen.
- Mittels der Buttons "zurück" und "weiter" kann der Benutzer zwischen den einzelnen Sichten wechseln (eine Sicht vor oder zurück) um Angaben zu vervollständigen usw.
- Mit dem Button "Abbrechen" gelangt der Auftragsersteller von den Sichten 1/3 bis 3/3 direkt zurück zur Suchmaske (ohne Änderung).
- Mussfelder und Kann-Felder ausfüllen (Sicht 2 von 3) (Figur 8)
   Die Daten aus Sicht 1/3 sind hier festgeschrieben sichtbar, ebenso wie der PIV der Akte, der FAPP und das BKZ. Hinzuzufügen sind
   - Datum der Auftragserteilung (vorbelegt mit Tagesdatum)
   - Bemerkung(en) zum Auftrag (weißes Eingabefeld)
   - (Zusätzliche) Mussfelder (abhängig von der Aufgabe); sind mit einer Stern-Markierung gekennzeichnet
   - Interne Leistungsverrechnung (Checkbox ja/nein, bzw. mit Prozent-Anteilen des Auftragnehmers versehen): "Kann-Feld"
- Dokumente erstellen (Sicht 3 von 3): Muss-Dokumente des jeweiligen Auftrags sind mit einer Stern-Markierung gekennzeichnet.
- Der Auftrag kann erst abgesendet werden, wenn die Vollständigkeit der Muss-Daten und -Dokumente gegeben ist (Plausibilitäten). Die Vollständigkeit wird von IPAS überprüft (sind Mussfelder ausgefüllt, bzw. alle Dokumente hinterlegt?), der Auftraggeber kann selbst noch mal überprüfen, ob der Auftragnehmer auch wirklich zuständig ist für die weitere Auftragsbearbeitung. Ist der Auftrag vollständig, kann der Button "Absenden" betätigt und der Auftrag versendet werden. Danach erscheint die Sicht des Posteingangskorb des auftragvergebenden Standorts, so dass sofort ein weiterer neuer Auftrag vergeben werden kann. Punkt 2 der Graphik bezieht sich auf die Suchmaske, nicht auf den Posteingangskorb, der erscheint wenn man auf "Absenden" drückt (im PEK ist kein Button "Neu" vorhanden). Falls man sofort wieder einen neuen Auftrag vergeben will, steht der Button "Absenden und Neuen Auftrag erstellen" zur Verfügung.

Mittels Klick auf den Button "Absenden und Neuen Auftrag erstellen" kann einerseits der zuvor erstellte Auftrag abgesendet werden, andererseits kann man gleich darauf einen weiteren Auftrag erstellen (man gelangt nach Buttonklick direkt wieder in die Sicht 1/3 des Prozesses "Auftrag erstellen").

Durch Klick auf die Buttons "Absenden" bzw. "Absenden und Neuen Auftrag erstellen" wird für den jeweiligen auftragnehmenden Standort eine Rückläuferfrist gesetzt, innerhalb dieser muss der Auftrag bestätigt werden. Geschieht dies nicht innerhalb der festgelegten Frist, entscheidet der Auftragnehmer über die weitere Vorgehensweise.

Mussfelder bzw. Muss-Dokumente unterscheiden sich von "Kann"-Feldern bzw. -Dokumenten durch eine entsprechende Markierung mit einem Stern nach der Bezeichnung und sind in entsprechenden Stammdatentabellen in IPAS hinterlegt.

Des weitere bestehen folgende zusätzliche Optionen:
- Ein neuer Auftrag kann erstellt werden unabhängig davon, ob der vorige Auftrag bestätigt wurde oder nicht: Button "Neu" drücken
- Auftrag ist noch nicht vom Auftragnehmer bestätigt worden: es besteht noch die Möglichkeit, den bereits gesendeten, noch unbestätigten Auftrag zu löschen: Button "Löschen" (siehe Prozess "Auftrag löschen"). Ein Auftrag kann nur von Usern des Auftraggeber-Standorts gelöscht werden, d.h. der "Auftrag löschen" Button hat eine entsprechende Plausibilität. Ist im Prozess "Auftrag löschen" beschrieben, dass nur der Auftraggeber den Auftrag löschen kann.
- Nach dem Versand wird der Auftrag vom Auftragnehmer bestätigt: der Status des Auftrags und das Datumsfeld für die Auftragsbestätigung, werden vom System automatisch aktualisiert, wenn der Auftrag bestätigt wurde (siehe Prozess "Auftrag bestätigen").

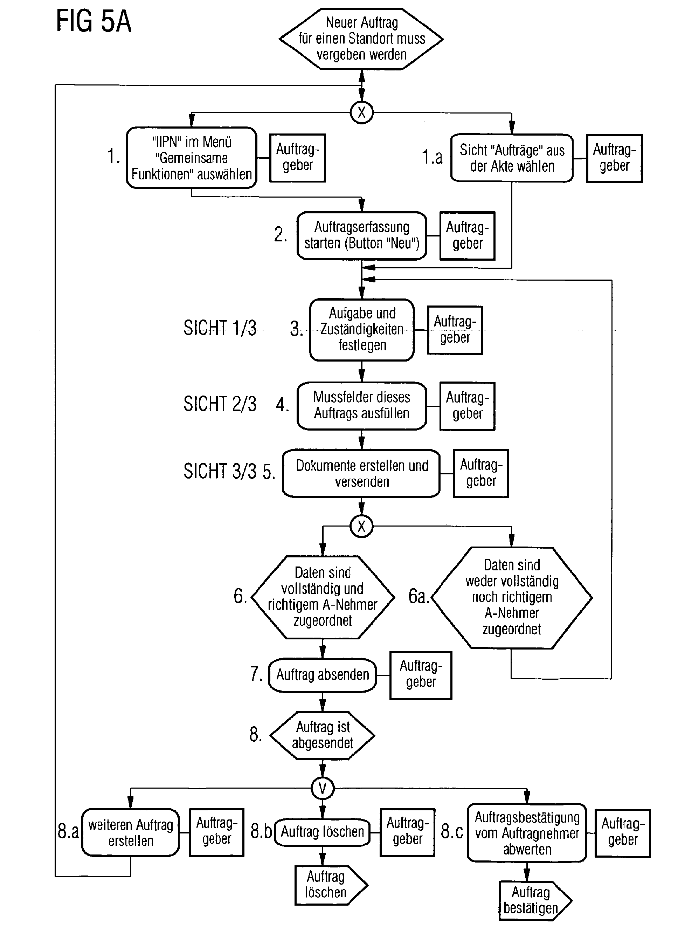

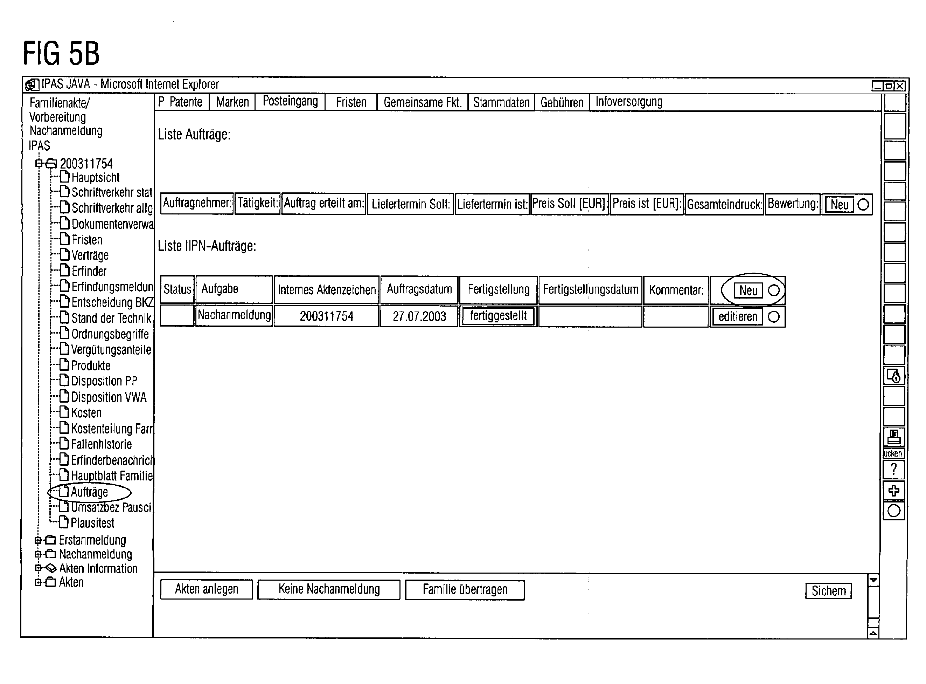

Sobald der Auftrag erstellt und abgesendet wurde, wird in der dazugehörigen Akte in der Hauptsicht der Schriftzug "IIPN an Standort XYZ liegt vor" eingeblendet, wobei mit Standort XYZ der auftragnehmende Standort gemeint ist (siehe Figur 5-10). Dieser Schriftzug wird solange dort eingeblendet, bis der Auftrag bestätigt wurde.

### Auftrag erstellen über Sicht "Aufträge" einer Familienakte

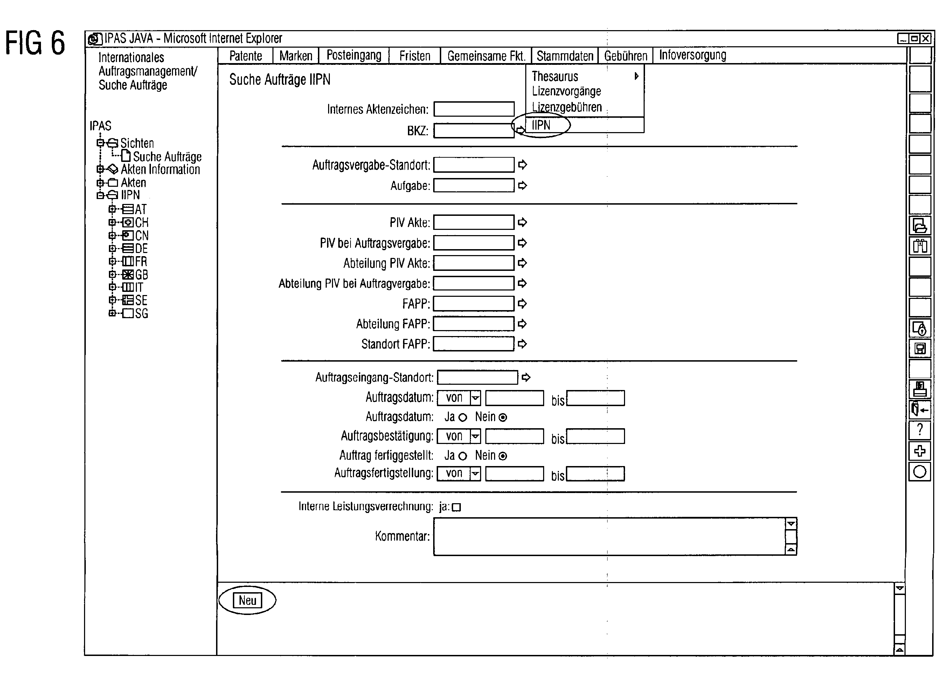

Nach dem Klick auf den Button "Neu" gelangt der User des auftragvergebenden Standorts direkt in die Sicht 1/3 für die Auftragserstellung IIPN (Figur 5). Auftragserstellung: Button "Neu" im Menü "Gemeinsame Funktionen", International IP Networking (IIPN) drücken (Figur 6). Kommt man aus der Familie (über Sicht Aufträge), dann ist das interne Aktenzeichen bereits mit dem Familienaktenzeichen belegt.

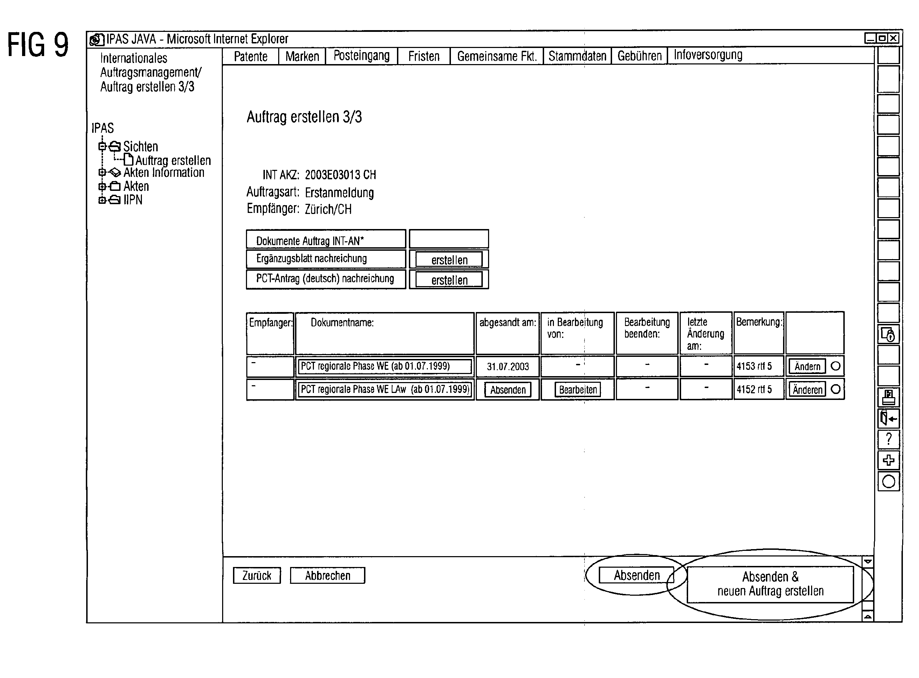

Die in Figur 9 dargestellte Maske wird um die Möglichkeit ergänzt, dass vorhandene Dokumente aus der Akte etc. in diese Dokumententabelle hinzugefügt werden können. Dazu wird der Button "Neu" rechts in der Dokumententabelle ergänzt. Dieses Feature wird aber nicht im ersten Schritt umgesetzt.

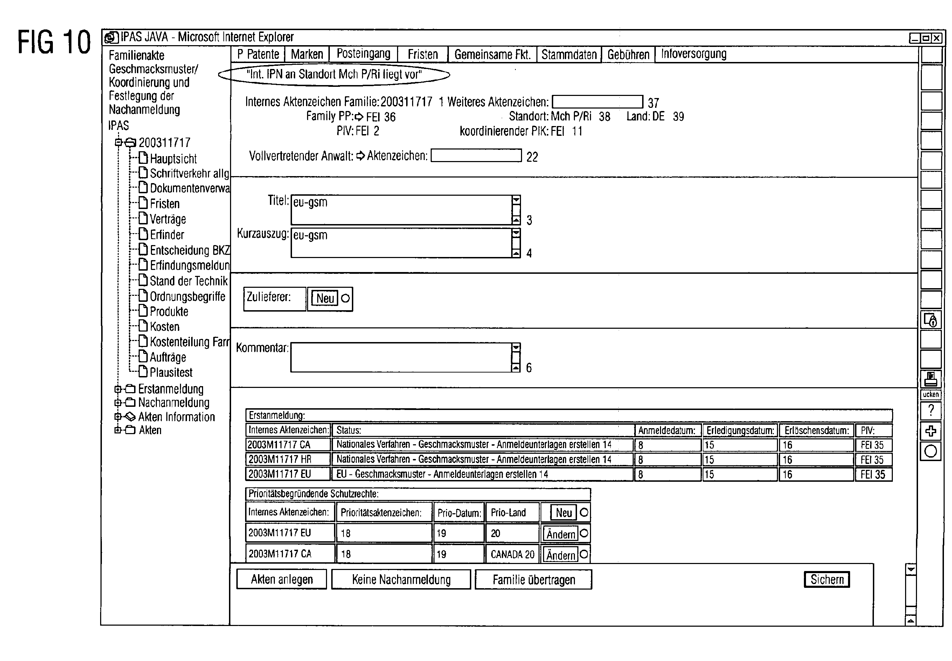

Liegt für eine Akte ein noch unbestätigter IIPN-Auftrag vor, erscheint in der betreffenden Akte (Hauptsicht) ein roter Schriftzug "Int. IPN für Standort XYZ liegt vor" (Figur 10).

### AUFTRAG LÖSCHEN

Voraussetzung ist, daß in noch nicht bestätigter Auftrag vom auftraggebenden Standort gelöscht werden soll. Aus dem Posteingangskorb des auftragnehmenden Standorts kann er sich aus der Auftragsliste den betreffenden Auftrag mit einem Klick auf das Aktenzeichen auswählen.

Vorangehende Prozesse sind "Auftragsliste erstellen (über Baum)" und "Auftrag anzeigen".

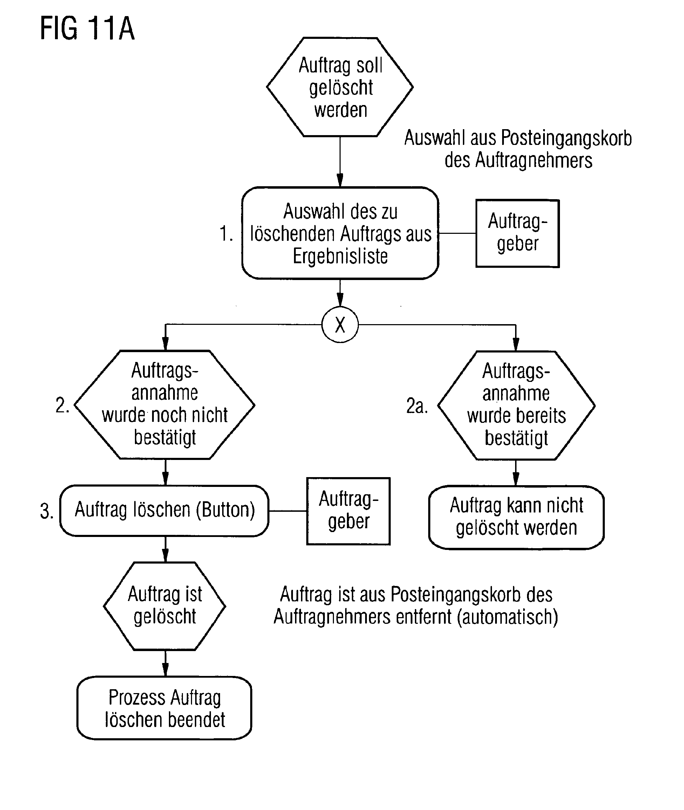

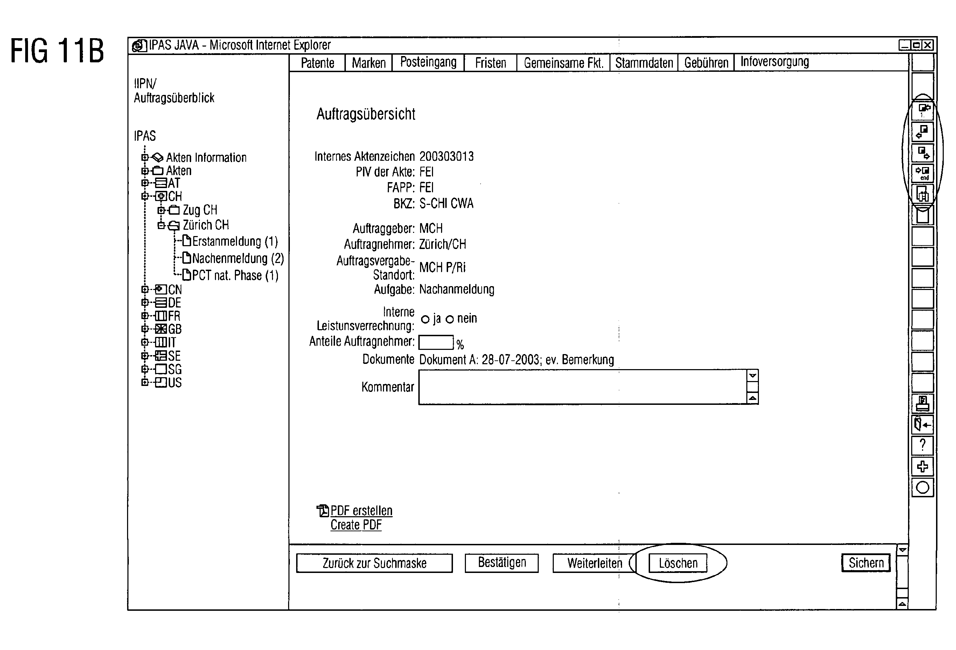

Im Falle, dass ein bereits versendeter Auftrag gelöscht werden soll, kann der Auftraggeber dies mit einem Klick auf den Button "Löschen" tun - unter der Voraussetzung, dass dieser Auftrag noch nicht vom Auftragnehmer bestätigt, also angenommen, wurde (Figur 11a und b). Der Button "Löschen" befindet sich in der Ansicht jenes Auftrags, der aus zuvor aus dem Posteingangskorb des auftragnehmenden Standorts ausgewählt wurde.

Sobald der Auftrag gelöscht wurde, wird der Link zu diesem Auftrag automatisch aus dem Posteingangskorb des Auftragnehmers entfernt. Die Tatsache, dass der Auftrag gelöscht wurde, ist für den User nun nicht mehr ersichtlich.

Auslösendes Ereignis ist, daß der Auftraggeber den bereits versendeten Auftrag löschen möchte (z.B. Zuständigkeit des gewählten Auftragnehmers war nicht gegeben, Auftrag für falsche Akte erstellt, Auftrag nicht mehr relevant etc.).

Der Auftrag soll gelöscht werden: dazu geht man in den Posteingangskorb des auftragnehmenden Standorts (siehe Prozess "Auftragsliste erstellen über Baum")
Aus der Auftragsliste des Auftragnehmers wählt der Auftraggeber einen bestimmten, noch nicht bestätigten (rot hinterlegten) Auftrag aus und erhält eine Ansicht dieses Auftrags. Unter dieser Ansicht befindet sich der Button "Löschen". Sobald dieser betätigt wird, wird der Auftrag komplett aus dem Posteingangskorb des Auftragnehmers gelöscht und ist für User nicht mehr einsehbar.

Der gewählte Auftrag ist noch nicht bestätigt worden, daher kann der Auftrag noch gelöscht werden (Auftrag ist noch rot hinterlegt in Auftragsliste des Posteingangs): Klick auf Button "Löschen". Wenn Auftragnehmer den Auftrag bereits bestätigt hat (Auftrag ist in der Posteingangsliste gelb gefärbt), dann kann dieser Auftrag nicht mehr gelöscht werden. Die Dokumente können in der Auftragsübersicht in der eingeblendeten Dokumententabelle (ohne Buttons) angeklickt, und somit geöffnet und gedruckt werden.

### AUFTRAG BESTÄTIGEN

Voraussetzung sind die Prozesse "Auftragsliste erstellen (über Baum)" und "Auftrag anzeigen"

Der Auftragnehmer findet in seinem Posteingang Aufträge, die er zugeteilt bekommen hat, und muss den Auftraggebern innerhalb der jeweils gesetzten Rückläuferfrist bestätigen, ob er ihre Aufträge annimmt oder nicht. Ein ausgewählter Auftrag wird bestätigt, indem der Auftragnehmer den Button "Bestätigen" anklickt, daraufhin ändert sich die Farbe des Auftrags im Posteingangskorb des auftragnehmenden Standorts von rot auf gelb und die Rückläuferfrist wird erledigt.

Die Bestätigung eines IIPN-Auftrags kann nur durch jene IPAS-User erfolgen, die dem auftragnehmenden Standort angehören (Plausibilität). Bei der Bestätigung werden automatisch das Tagesdatum und der bestätigende User gespeichert, diese Daten sind in der Historie des IIPN (in der Familie) ersichtlich.

Nach Klick auf den Button "Bestätigen" erscheint je nach Aktenart (NAT bzw. WO/EP/WE-Akte) jene Maske, auf welcher der PIV der Akte über ein weißes Eingabefeld und einen blauen Pfeil geändert werden kann. Der PIV ist vorbelegt mit dem bis dahin zugeteilten PIV und dessen zugehörigem Standort. Bei den Aktenarten NAT gelangt man nach der Änderung, bzw. auch ohne Änderung, mit dem Button "Aktion abschließen" wieder zurück in den Posteingangskorb des auftragnehmenden Standorts. Bei den Akten WO, EP bzw. WE (Dachakten) gibt es in dieser Sicht "PIV ändern" noch einen weiteren Button, der mit "PIV der Länderakten ändern" gekennzeichnet ist.

Nach Klick auf diesen Button erscheint eine weitere Sicht, in welcher die PIVs der einzelnen Länderakten geändert werden können (über weißes Eingabefeld und einen blauen Pfeil). Diejenigen Länderakten, für welche der PIV geändert werden soll, werden über voranstehende Checkbox ausgewählt (wobei zuerst standardmäßig alle Checkboxen der Länderakten angekreuzt sind, d.h. bei jenen Länderakten, wo nichts geändert werden soll, muss die Checkbox deaktiviert werden, so dass sie leer ist). Der derzeitige PIV der Länderakte, sowie dessen Standort sind vorbelegt, in den weißen Eingabefeldern ist in der Standardeinstellung der PIV der dazugehörigen Dachakte (der ev. vorher geändert wurde) eingetragen. Nachdem bei den ausgewählten Länderakten der PIV verändert wurde, gelangt man über den Button "Aktion abschließen" zurück zum Posteingangskorb des Auftragnehmer-Standorts.

Wird der Auftrag aus diversen Gründen (mangels Zuständigkeit, fehlende Zeit etc.) nicht vom zugewiesenen Standort bearbeitet, dann besteht die Möglichkeit, den Auftrag weiterzuleiten bzw. an den Auftraggeber zurückzusenden.

Alle Weiterleitungen, Löschungen, Änderungen usw. werden automatisch in die Historie IIPN (Sicht in der Familie) übernommen.

Auslösendes Ereignis ist der Erhalt eines neuen Auftrags: Meldung im Posteingangskorb des Auftragnehmers.

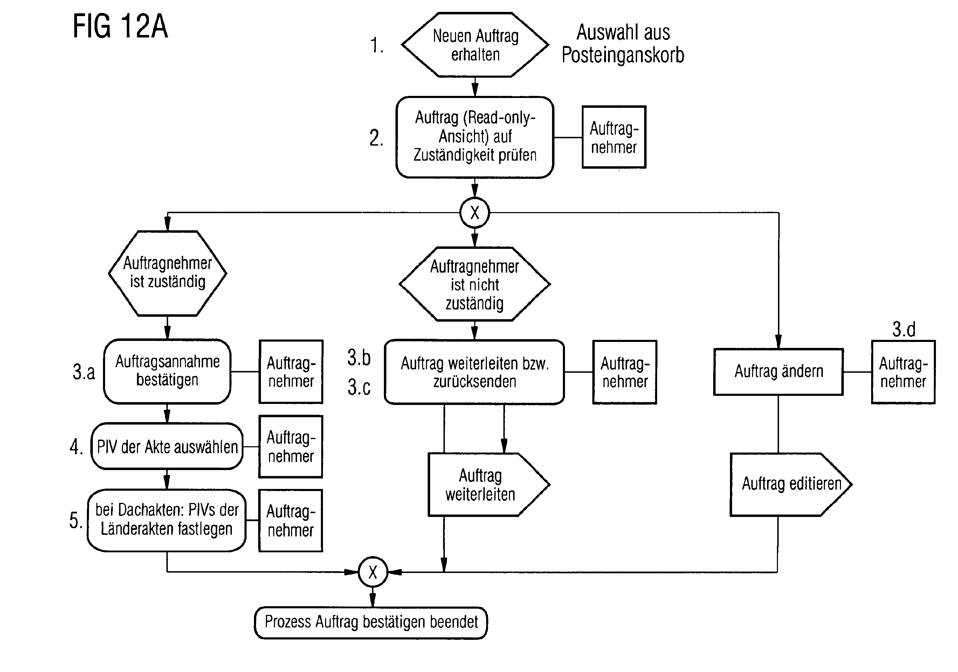

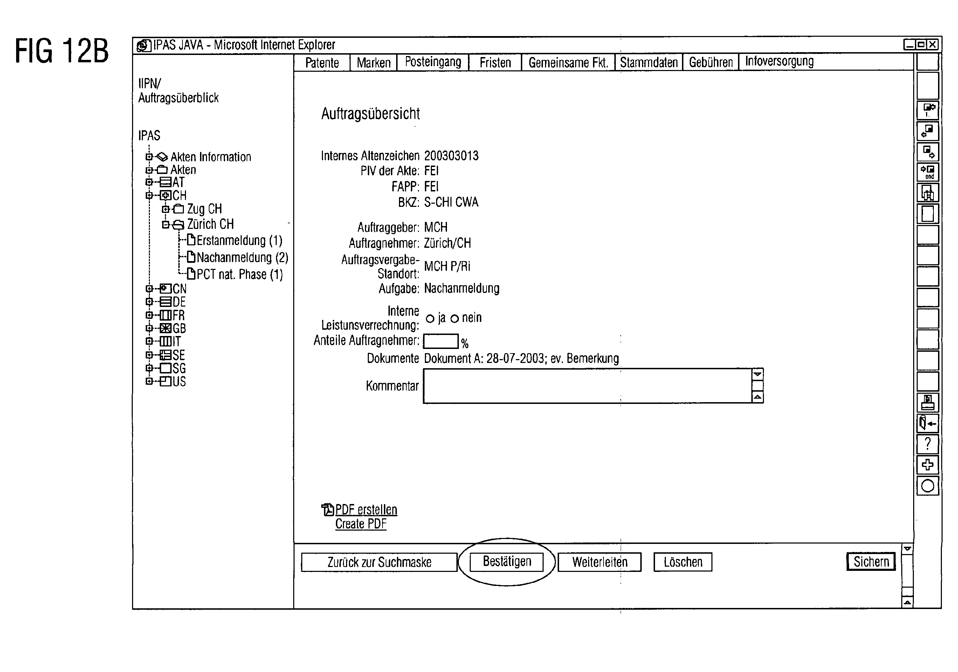

Über den Prozess "Auftragsliste erstellen (über Baum)" gelangt der Auftragnehmer zum Posteingangskorb seines Standorts (Figur 12a). Dieser Posteingangskorb zeigt an, ob neue Aufträge eingegangen sind, und aus der Liste wählt der Auftragnehmer einen noch nicht bestätigten Auftrag aus. Nach der Auswahl erhält der Auftragnehmer eine Ansicht des Auftrags, anhand derer erfolgt eine Prüfung des Antrags (ob der auftragnehmende Standort tatsächlich zuständig ist). Je nach Prüfungsergebnis entscheidet sich der auftragnehmende Standort für das weitere Vorgehen (Button: "Auftrag bestätigen" oder Button: "Auftrag weiterleiten"). Der Auftrag kann aber auch abgeändert werden. Wird der Auftrag bestätigt, wird über die nächste Sicht der PIV für die jeweilige Akte ausgewählt. Handelt es sich um Dachakten, so existiert in dieser Sicht auch der Button "PIV der Länderakten ändern", bei dessen Aktivierung man in eine weitere Sicht gelangt. Bei NAT-Akten besteht hingegen scheint dieser Button nicht auf. Für Dachakten können in dieser weiteren Sicht die PIVs der einzelnen Länderakten einzeln geändert werden, wobei jene Länderakten, wo eine Änderung vorgenommen werden soll, mittels Häkchen in der Checkbox markiert werden. Als neuer PIV wird automatisch der PIV der Dachakte vorgeschlagen, dieser ist jedoch über ein weißes Eingabefeld und den blauen Pfeil editierbar.

Der Auftragnehmer nimmt den Auftrag an zur weiteren Bearbeitung: Klick auf Button "Auftrag bearbeiten". Das Ampelsystem bzgl. Status schaltet automatisch auf gelb um (Auftrag im Posteingangskorb des Standort ist ab nun gelb hinterlegt), und es werden die Fristen für diesen Auftrag ausgelöst. Der Auftragnehmer leitet den Auftrag an einen anderen zuständigen Standort weiter: Klick auf Button "Weiterleiten". Auftragnehmer leitet Auftrag wieder zurück an seinen Auftraggeber: Klick auf Button: "Weiterleiten". Der Auftragnehmer kann den Auftrag auch ändern. Das Bestätigen des Auftrags erfolgt durch Drücken des Buttons "Bestätigen" in der Ansicht des Auftrags (Figur 12b.)

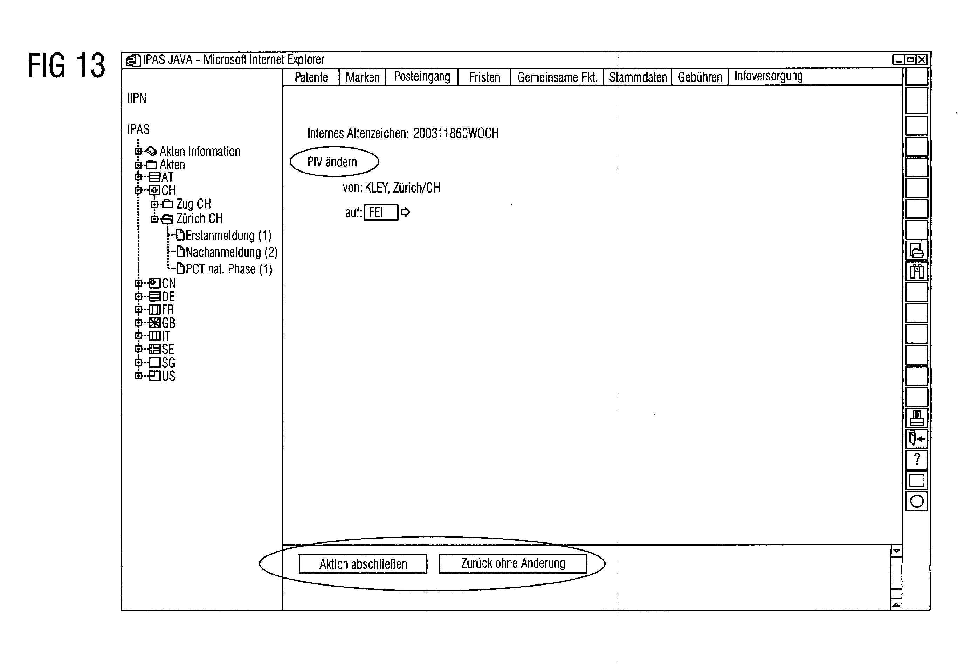

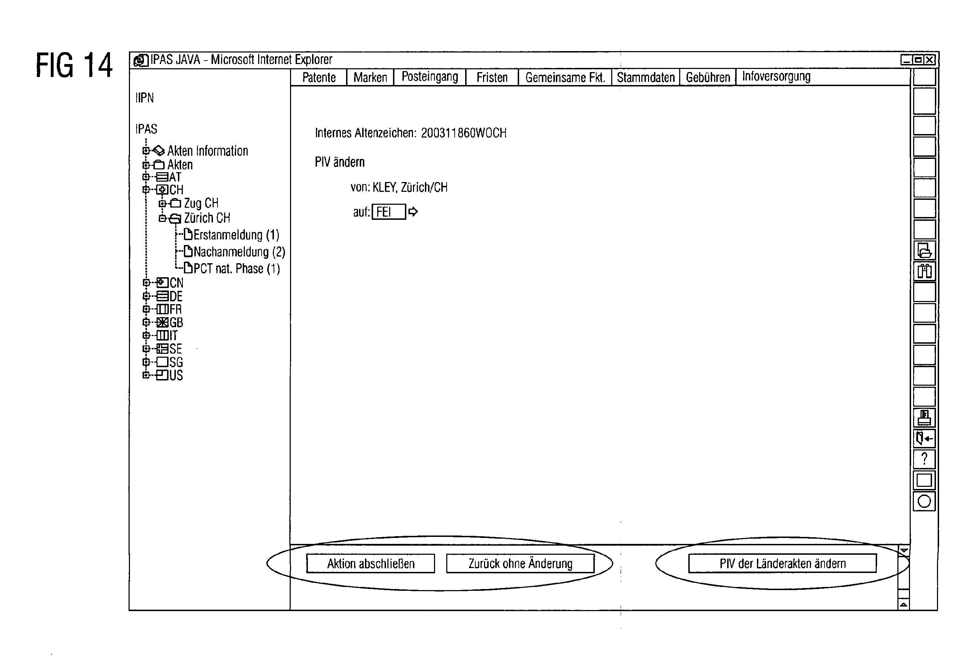

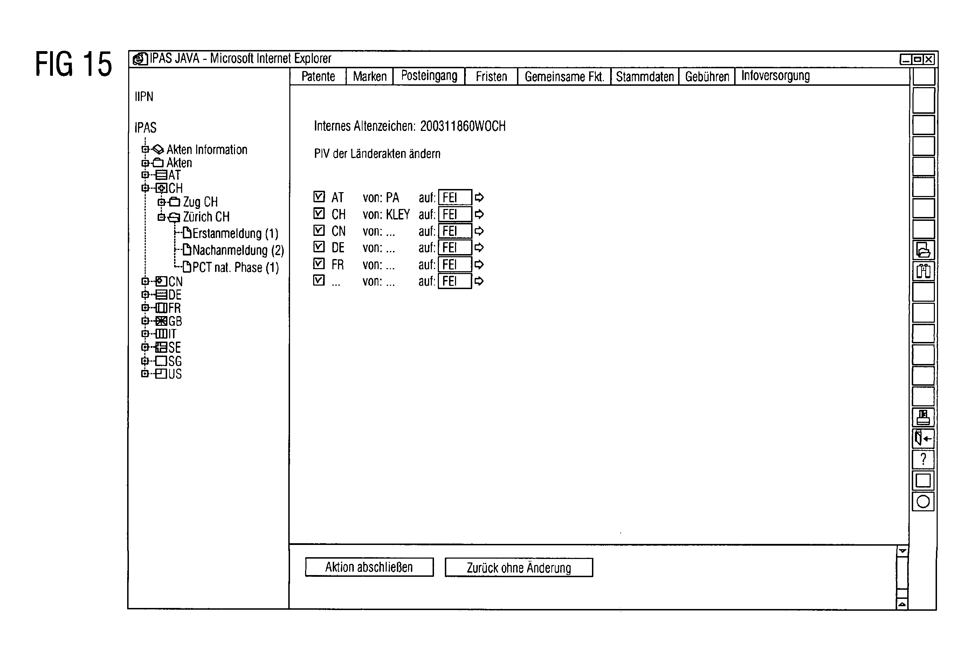

Es besteht auch die Möglichkeit, die PIVs der einzelnen Länderakten zu ändern, mittels Klick auf Button "PIV der Länderakten ändern"(Figur 13-15). Wenn dies nicht gewünscht ist, gelangt man mit dem Button "Aktion abschließen" bzw. "Zurück ohne Änderung" in den Posteingangskorb des auftragnehmenden Standorts.

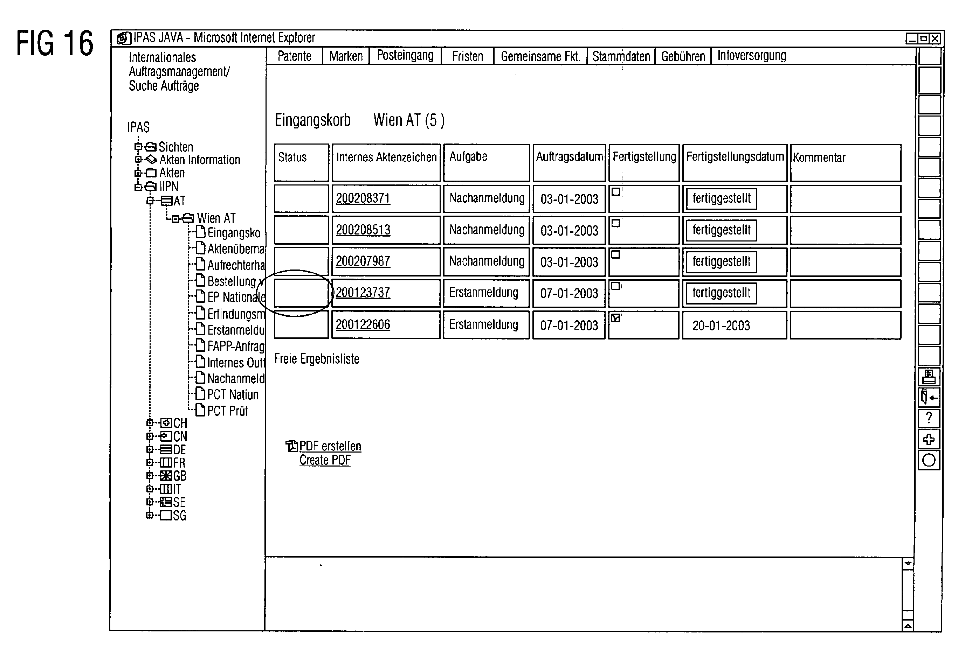

In der Sicht "PIV der Länderakten ändern" werden nur Kinderakten der jeweiligen Dachakte angezeigt. Jene Länderakten, wo der PIV zu ändern ist, werden mittels Checkbox ausgewählt und durch Eintrag ins weiße Eingabefeld bzw. den blauen Pfeil editiert. Die Bestätigung erfolgt mit "Aktion abschließen" und man gelangt wieder - wie auch bei Klick auf "Zurück ohne Änderung" zum Posteingangskorb des Auftragnehmers (Standort). Die Statusänderung aufgrund der Bestätigung des Auftrags ist ersichtlich im Posteingangskorb des Auftragnehmers (Figur 16).

### AUFTRAG WEITERLEITEN

Voraussetzung sind die Prozesse "Auftrag anzeigen" Prozess "Auftrag bestätigen".

Nachdem der Auftragnehmer den erhaltenen Auftrag (Ansicht) auf Zuständigkeit seines Standorts geprüft hat, und erkennt, dass die Zuständigkeit nicht gegeben ist, soll der Auftrag letztendlich einem anderen Standort zur Bearbeitung weitergeleitet werden. Dafür klickt der Auftragnehmer auf den Button "Auftrag weiterleiten", gibt in der darauf folgenden Sicht Daten zum nächsten Empfänger (= ein Standort) und eine Bemerkung bzgl. des Auftrags bzw. der Weiterleitung ein und sendet den Auftrag ab. In diesem Fall ist die zuvor vom Auftraggeber festgesetzte Rückläuferfrist erledigt, und es wird eine neue Rückläuferfrist, geltend für den neuen Auftragnehmer, ausgelöst. Als dessen Auftraggeber gilt weiterhin der ursprüngliche Auftraggeber (= derjenige Standort, der den Auftrag erstellt hat). Die Weiterleitung wird in der Historie IIPN der Akte angezeigt (Sicht in der Familie).

Der Auftragnehmer kann sich anhand seiner Eingabe im Empfängerfeld entscheiden, ob der Auftrag an eine andere zuständige Person/Abteilung weitergeleitet wird, oder ob er seinem Auftraggeber den Auftrag retour sendet.

Auslösendes Ereignis ist das Ergebnis der Auftragsprüfung (siehe Prozess "Auftrag bestätigen") sagt aus, dass der neue Auftrag nicht vom Auftragsempfänger selbst bearbeitet werden kann (Zuständigkeit nicht gegeben, oder mangels Zeit ...)

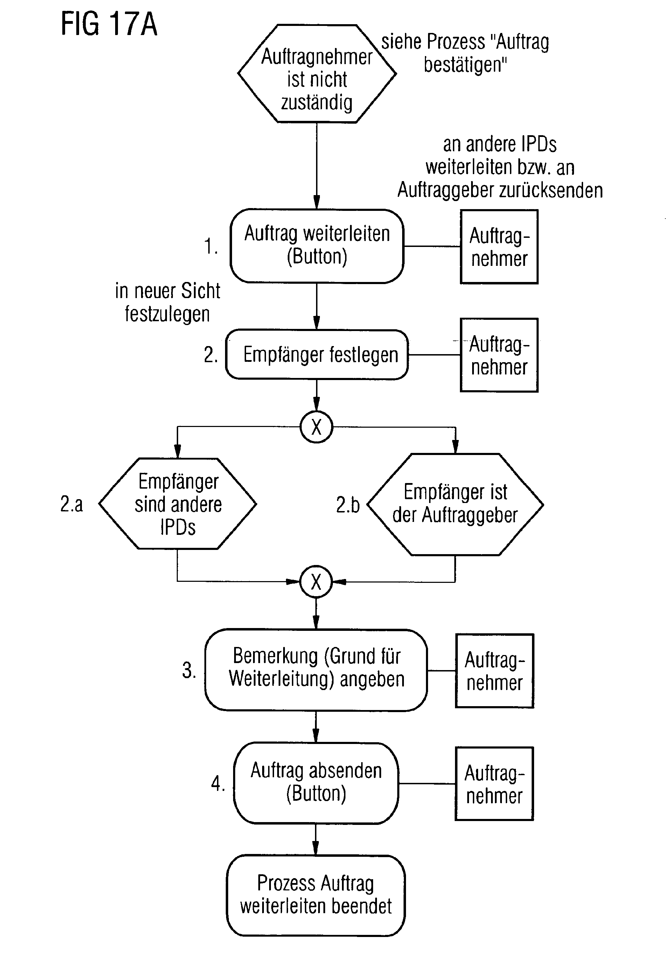

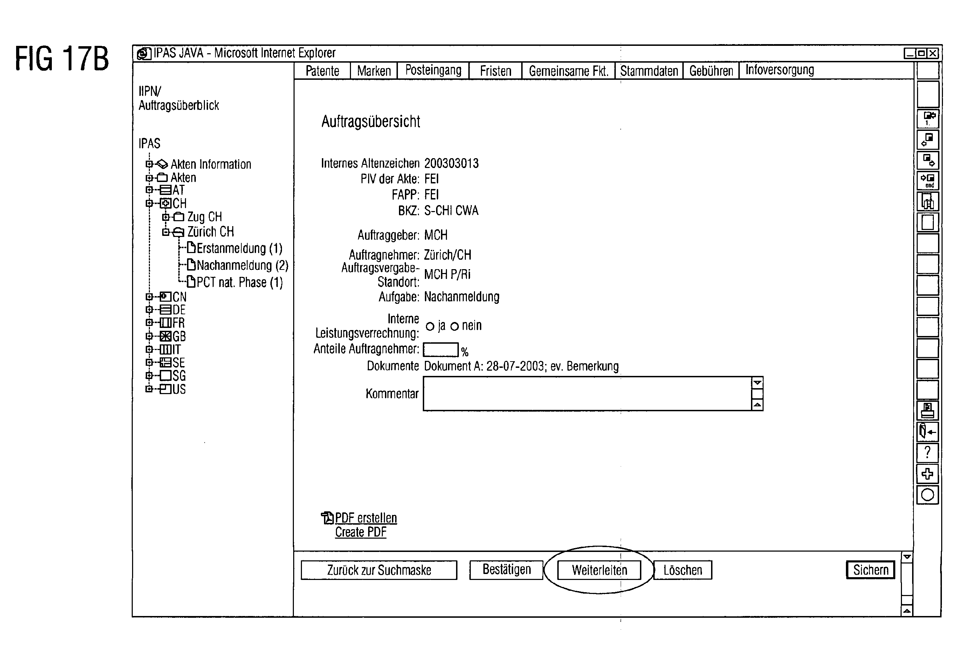

Falls der Auftrag an einen anderen Zuständigen weitergeleitet bzw. zurückgesendet werden muss, erfolgt ein Klick auf den Button: "Weiterleiten" (Figur 17a und b) In der neuen Sicht ist der Empfänger festzulegen. Das Feld "Bemerkung" (Grund für Weiterleitung, nähere Information bzgl. Bearbeitung etc.) wird anschließend ausgefüllt. Mit einem Klick auf den Button: "Absenden" erscheint der Auftrag nun rot hinterlegt in der Standortübersicht des ausgewählten Empfängers. Wenn dieser neue Empfänger den Auftrag anwählt erhält er eine Ansicht des Auftrags und kann diesen Auftrag nun zur Weiterbearbeitung annehmen ("Auftrag bestätigen") bzw. auch weiterleiten ("Auftrag weiterleiten") oder ändern ("Auftrag editieren").

Falls nicht der auftragnehmende Standort, sondern ein anderer Standort für die Bearbeitung des Auftrags zuständig und auch berechtigt ist, wird der komplette Auftrag an diese weitergeleitet. Empfänger ist wieder der Auftraggeber (Erzeuger des neuen Auftrags), wenn nach der Auftragsprüfung für den Auftragnehmer der Grund besteht, den Auftrag zurückzuweisen.

### AUFTRAG EDITIEREN

Voraussetzung sind die Prozesse "Auftragsliste erstellen (über Baum)" bzw. "Auftrag suchen" und "Auftrag anzeigen".

Hat der Auftragnehmer einen Auftrag erhalten (Posteingangskorb), kann er einen bestimmten Auftrag auswählen (Aktenzeichen = Link zu Auftrag) und erhält dann als erstes die Ansicht dieses Auftrags. Hier können die Felder "Interne Leistungsverrechnung", "Anteile Auftragnehmer", sowie "Kommentar" verändert werden. Durch den Button "Sichern" können die Änderungen im Auftrag festgehalten werden. Der Auftragnehmer hat nun die Wahl, diesen geänderten Auftrag weiterzuleiten, zu bestätigen oder erneut zu ändern.

Der Auftrag kann öfters editiert werden. Nach dem Klick auf den Button "Sichern" erscheint wieder die Auftragsübersicht, mit den geänderten Daten. Diese Auftragssicht ist über das pdf-Symbol auch ausdruckbar. Geänderte Daten müssen erst mit dem Sichern-Button bestätigt werden, damit sie am Ausdruck sichtbar sind.

Auslösendes Ereignis ist, dass der Auftragnehmer bzw. Auftraggeber einen erhaltenen Auftrag ändern möchte.

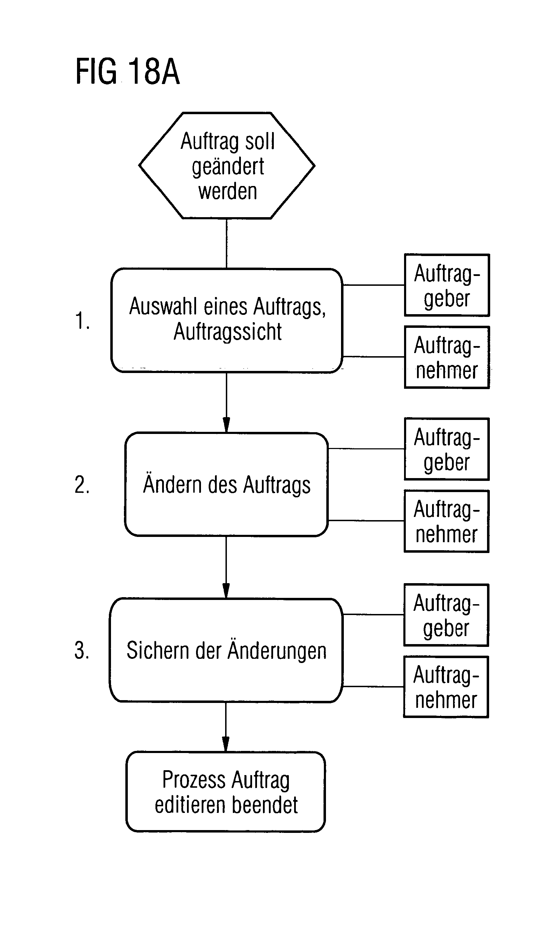

Nachdem aus der Auftragsliste ein Auftrag ausgewählt wurde, und in der Ansicht verfügbar ist, kann dieser Auftrag geändert werden (Figur 18a). Änderung der zur Verfügung stehenden Felder. Abschließend werden die Daten mit einem Klick auf den Button "Sichern" gespeichert. Man erhält wieder die Auftragsübersicht, jedoch mit den geänderten Daten, welche erneut editierbar sind. Außerdem hat man die Optionen, den Auftrag erneut zu editieren, weiterzuleiten oder zu bestätigen.

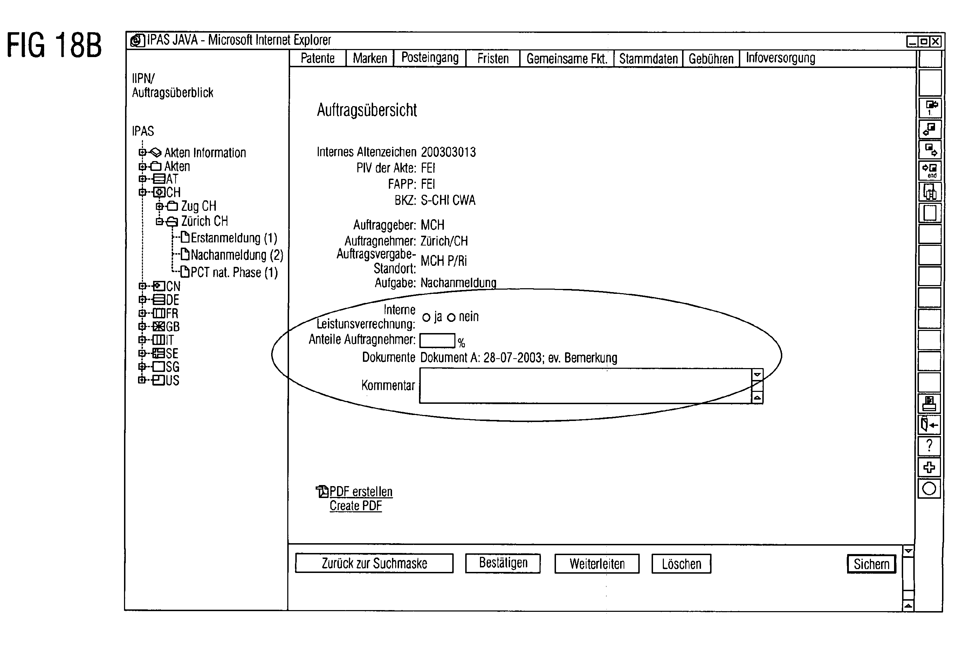

Mit dem Button "Zurück ohne Änderung" gelangt man wieder in die Suchmaske (Figur 18b). durch Klick auf den Button "Sichern" werden etwaige Änderungen gespeichert und die Auftragsübersicht erscheint wieder mit den geänderten Daten. Will man wieder in den Posteingangskorb zurück, kann man den gewünschten Standort im navigierbaren Baum anklicken. Je nach Status des Auftrags erscheinen mehr oder weniger viele Buttons: Bis zum Status gelb sind die Buttons "löschen", "weiterleiten" und "bestätigen" ersichtlich, ab dann kann der Auftrag nur noch geändert werden, bzw. ausgedruckt (pdf-Symbol).

### AUFTRAG ALS FERTIG BEARBEITET BESTÄTIGEN

Voraussetzung ist, daß der auftragnehmende Standort die Annahme des Auftrags bestätigt und einen PIV ausgewählt hat. Der vergebene Auftrag, z.B. eine Erstanmeldung, wird in weiterer Folge vom Auftragnehmer erledigt, d.h. die Erstanmeldung für eine bestimmte Akte wird von ihm erfasst.

Der auftragnehmende Standort hat einen Auftrag des IIPN zur Bearbeitung übernommen und erfasst je nach Aufgabe z.B. eine Erstanmeldung in IPAS. Ob und wann dieser Auftrag fertiggestellt ist, oder nicht, wird durch einen automatischen Mechanismus festgelegt. Erst wenn dieser sog. Auftragserledigungs-Trigger (siehe unten) ausgelöst wurde, wird der betreffende Auftrag als fertiggestellt angesehen. Mit der Fertigstellung (Auslösen des Triggers) verfärbt sich der Status der Akte im Posteingangskorb (Auftragsliste) von gelb auf grün bzw. wird dort auch automatisch das Tagesdatum der Fertigstellung eingetragen.

Der Auftraggeber erhält aus der Auftragsliste für diesen Standort Kenntnis, dass dieser Auftrag fertiggestellt wurde, denn der Status ist eindeutig durch die grüne Färbung des Auftrags zu ersehen.

In der Ergebnisliste der Suche (über Suchmaske bzw. Sicht "Aufträge") ist außerdem ein Häkchen in der Spalte "Fertigstellung" sichtbar (unveränderbar). Über die Suche mittels Baum ist diese Spalte nicht vorgesehen.

Beim Auftragserledigungstrigger handelt es sich um einen auftragsspezifischen Code, der in der IPAS-Datenbank für die gewünschten Auftragsarten hinterlegt wird. Im Prinzip funktioniert der Auftragserledigungstrigger wie ein Fristentrigger, d.h. er wird automatisch ausgelöst, wenn bestimmte, vorher definierte, Voraussetzungen gegeben sind. Bei den Aufträgen des IIPN wird der AE-Trigger ausgelöst, sobald alle Daten für den jeweiligen Auftrag eingegeben sind (alle Plausibilitäten erfüllt sind) und das beim Trigger in den Stammdaten hinterlegte Ereignis eintritt. Durch das Auslösen des Triggers werden dann folgende Aktionen ausgeführt:
- automatische Speicherung des Fertigstellungsdatums (Tagesdatum): ersichtlich in Posteingangskorb des auftragnehmenden Standorts bzw. in der Historie (hier zusätzlich mit Daten, welcher Standort den Auftrag fertiggestellt hat)
- Statusänderung des Auftrags im Posteingangskorb des auftragnehmenden Standorts (von gelb auf grün)
- Für die betreffende Akte wird in der Spalte "Fertigstellung" in der Auftragsliste, welche über die Suchmaske bzw. die Sicht "Aufträge" generiert wird, ein Häkchen als Symbol für die Fertigstellung automatisch eingetragen.

Sobald ein Auftrag fertig bearbeitet ist, muss der dafür zuständige Standort die Fertigstellung bestätigen. Dafür ist der Button "fertiggestellt" in der Auftragsliste im Posteingangskorb zu betätigen. Der Status der Akte verfärbt sich nach dem Klick von gelb auf grün.

Der Auftraggeber erhält aus der Auftragsliste für diesen Standort Kenntnis, dass dieser Auftrag fertiggestellt wurde, denn der Status auch eindeutig durch die grüne Färbung des Auftrags zu ersehen.

Der zugeteilte Auftrag wurde vom auftragnehmenden Standort fertig bearbeitet (Plausibilitäten sind erfüllt: Voraussetzung für automatische Bestätigung der Fertig-stellung).

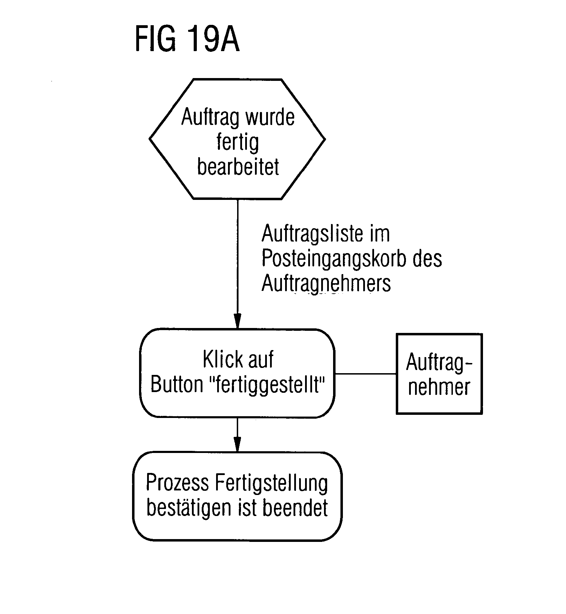

Im Posteingangskorb des Auftragnehmers wird die Auftragsliste angezeigt (Figur 19a). Will man die Fertigstellung eines bestimmten Auftrags melden, ist es nicht nötig, den Auftrag zu öffnen, sondern es genügt, den Button "fertiggestellt" in der Auftragsliste anzuklicken. Es wird in der Spalte rechts daneben dann automatisch das Datum der Meldung der Fertigstellung eingetragen bzw. der Status der Akte verfärbt sich von gelb auf grün.

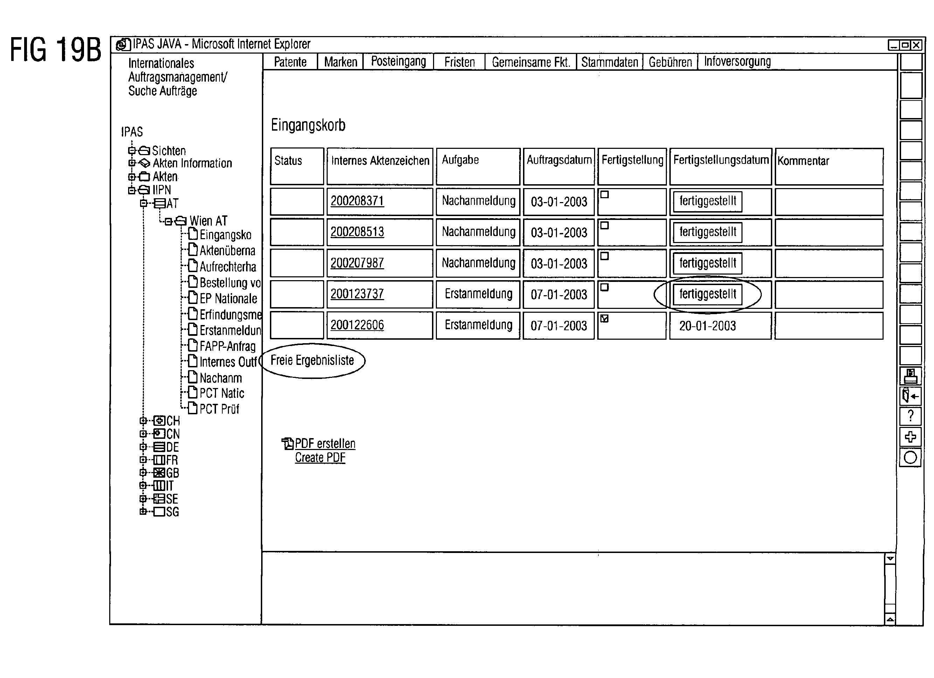

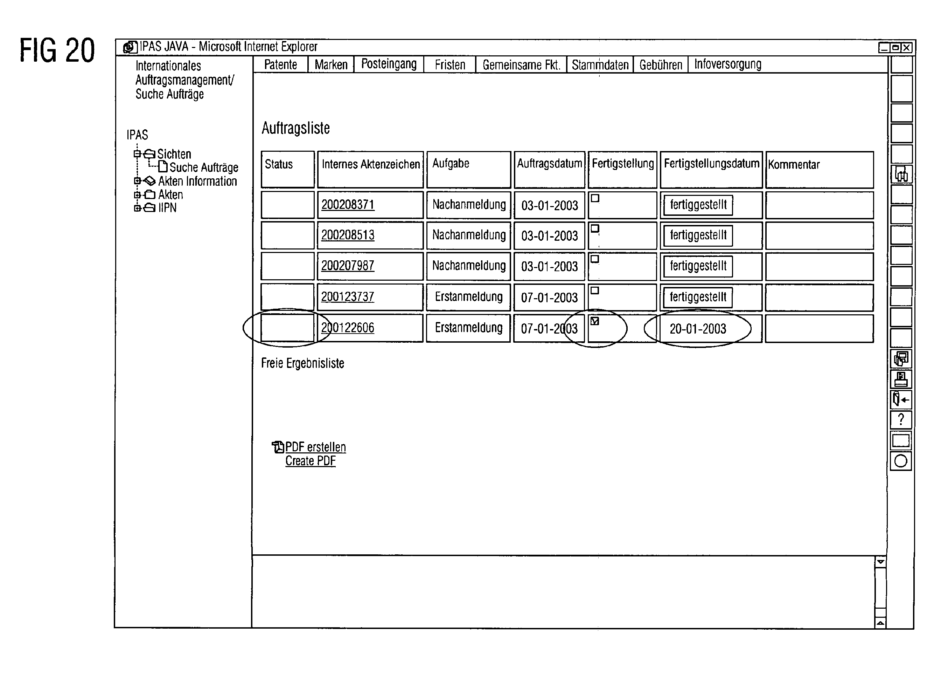

Die manuelle Bestätigung der Fertigstellung eines Auftrags erfolgt über den Button "fertig stellen" im Posteingangskorb des auftragnehmenden Standorts (Figur 19b). Wurde dieser Button geklickt, erscheint an seiner Stelle das Tagesdatum der Fertigstellung und der Status dieses Auftrags verfärbt sich von gelb auf grün (Figur 20).

### AUFTRAG DRUCKEN

Voraussetzung ist die Auswahl eines bestimmten Auftrags auf der Ergebnisliste der Suche bzw. Posteingangs-korb. Mittels Klick auf das Aktenzeichen (= Link) erscheint die Ansicht des Auftrags.

Aufträge im International IP Networking können jederzeit gedruckt werden. Mittels Klick auf das Symbol "PDF erstellen" in der Auftragsansicht wird ein druckbares pdf-Dokument generiert.

### AUFTRAGSLISTE ERSTELLEN (ÜBER BAUM)

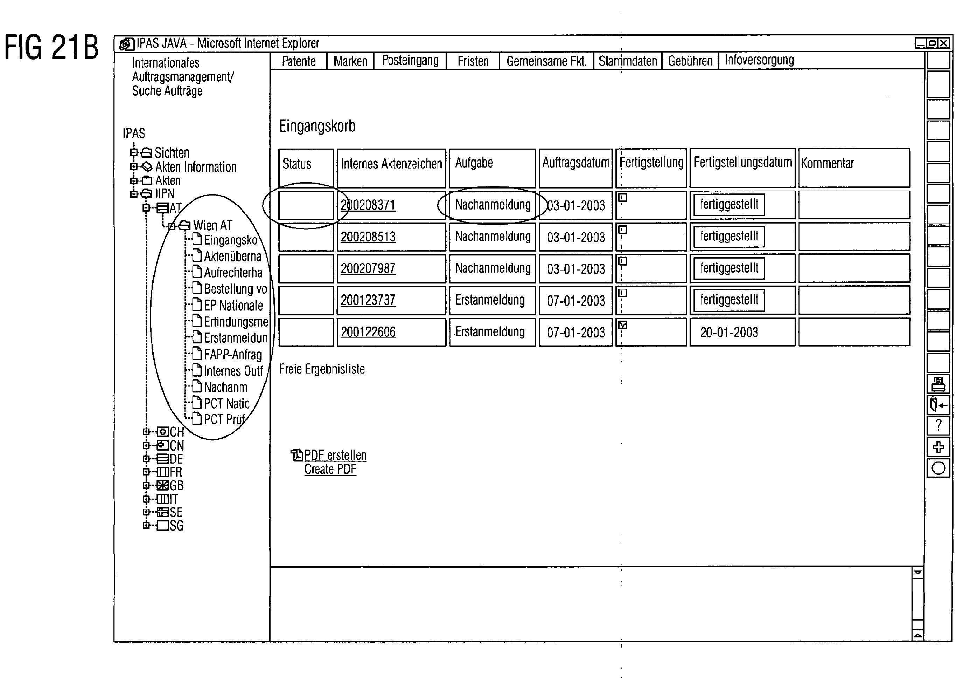

Will man in die Auftragsliste eines bestimmten Standorts einsehen, kann man sich dazu des Baums in der Navigationsleiste bedienen und kann auf die Suchmaske verzichten (Figur 21b). Durch den Klick auf den Ordner des gewünschten Standorts öffnet sich die Sicht mit allen erteilten Aufträge für diesen Standort, sortiert nach dem Status der Aufträge (zuoberst erscheinen die noch nicht bestätigten Aufträge). Diese Sicht der Auftragsliste entspricht dem Posteingangskorb dieses Standorts. Im ausgewählten Standort besteht auch die Möglichkeit, sich den Posteingangskorb für eine bestimmte Aufgabe gesondert anzusehen (z.B. nur Aufträge für Erstanmeldungen etc.)

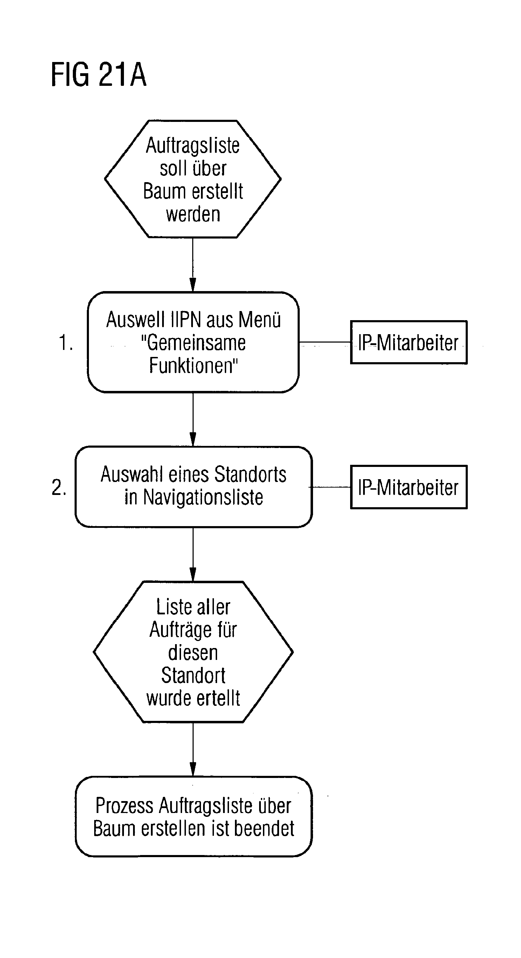

Zuerst wählt man in IIPN (Untermenü von "Gemeinsame Funktionen") aus dem Baum in der Navigationsleiste den gewünschten Standort aus (Figur 21a). Sobald der Ordner des Standorts angeklickt wurde, erhält man eine Sicht, die den Posteingangskorb dieses Standorts (bzw. einer bestimmten Aufgabe, in diesem Standort) anzeigt. Die dort aufgelisteten Aufträge können dann durch einen Klick auf das Aktenzeichen (= Link) ausgewählt und betrachtet werden (Auftragsübersicht).

Übersicht über alle eingegangenen Aufträge eines Standorts: Mittels Auswahl einer best. Aufgabe (Navigationsleiste) ist auch die Filterung des Posteingangskorbs des Standorts nach Aufgaben möglich.

Im Posteingangskorb werden neben den noch nicht bestätigten und in Bearbeitung befindlichen Aufträgen auch fertiggestellte Aufträge angezeigt, allerdings nur jene, die nicht älter als xx Monate sind. Wie lange ein fertiggestellter Auftrag im Posteingangskorb verweilt, wird in der Stammdatenmaske "Aufgabe" festgelegt.

In der dem Auftrag zugehörigen Akte werden alle erteilten Aufträge in der Sicht "Aufträge" immer sichtbar sein.

### AUFTRAGSLISTE DRUCKEN

Voraussetzung sind die Prozesse "Auftragsliste erstellen (über Suchmaske)" bzw. Prozess "Auftragsliste erstellen (über Baum)".Jede Auftragsliste kann auch als pdf-Dokument angezeigt und dann ausgedruckt werden (Symbol "PDF erstellen").

### ALLE AUFTRÄGE EINER AKTE ANZEIGEN

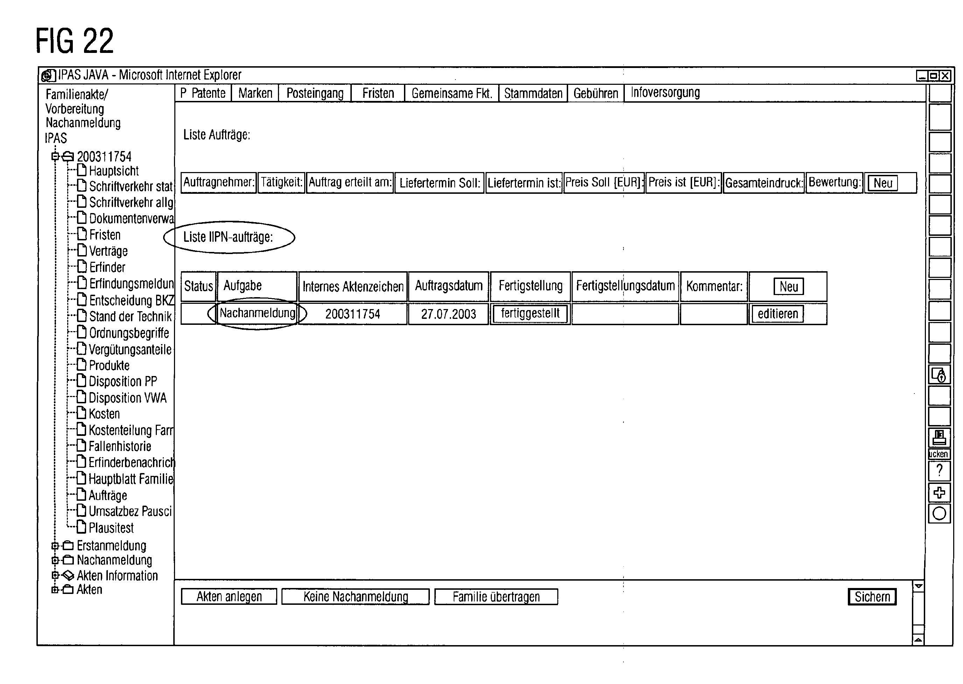

Um eine Übersicht über alle erteilten Aufträge des IIPN einer bestimmten Akte zu erhalten, muss man die Sicht "Aufträge" der Familie bzw. Erfindungsmeldung öffnen (Figur 22). Die, unter "Liste International IP Networking", ersichtliche Auftragsliste beinhaltet jeden jemals für diese Akte vergebenen IIPN-Auftrag, unabhängig von Auftraggeber, -nehmer, Status, Aufgabe etc.

Die vorangehend beschriebenen Verfahrensabläufe sind lediglich exemplarisch und dienen dem anschaulichen Verständnis. Somit ist die Anwendung der vorliegenden Erfindung nicht auf die beschriebenen Ausführungsbeispiele beschränkt.

## Patentansprüche

1. Verfahren zur Steuerung einer Auftragsbearbeitung, bei dem
- bei einer Auftragsbearbeitungsanforderung einer ersten Einheit anhand von Steuerungsparametern für eine Auftragsbearbeitung durch zumindest eine zweite Einheit eine Auftragsinformation zu einem von der zweiten Einheit zu bearbeitenden Auftrag erzeugt wird,
- die Auftragsinformation in einem Auftragsspeicher für die zweite Einheit abrufbar bereit gestellt wird,
- die Auftragsinformation zumindest einen Aufgabendeskriptor, einen Ereignis- und/oder Statusindikator, einen vorgegebenen Erledigungszeitpunkt und eine Angabe über dem zu bearbeitenden Auftrag zugeordnete Ressourcen umfaßt,
- Veränderungen des Ereignis- und/oder Statusindikators fortlaufend protokolliert werden.

2. Verfahren nach Anspruch 1,
bei dem im Auftragsspeicher bereit gestellte Auftragsinformationen zusätzlich für die zweite Einheit verfügbar gemacht werden.

3. Verfahren nach einem der Ansprüche 1 oder 2,
bei dem im Auftragsspeicher gespeicherte Auftragsinformationen nach zu ersten und/oder zweiten Einheiten zugeordneten Organisationseinheiten und/oder Standorten gegliedert sind.

4. Verfahren nach einem der Ansprüche 1 bis 3,
bei dem durch die Angabe über dem zu bearbeitenden Auftrag zugeordnete Ressourcen einen Bearbeiter und/oder Aktenstandort bezeichnen.

5. Verfahren nach einem der Ansprüche 1 bis 4,
bei dem die Steuerungsparameter in einer Parameterdatei für Zusammenarbeitsvereinbarungen abgespeichert sind.

6. Verfahren nach einem der Ansprüche 1 bis 5,
bei dem protokollierte Veränderungen des Ereignis- und/oder Statusindikators für die erste und/oder zweite Einheit abrufbar bereitgestellt werden.

7. Verfahren nach Anspruch 6,
bei dem die protokollierten Veränderungen des Ereignisund/oder Statusindikators im Auftragsspeicher bereitgestellt werden.

8. Auftragssteuerungssystem mit
- einer Einrichtung zur Erzeugung einer Auftragsinformation
- bei einer Auftragsbearbeitungsanforderung einer ersten Einheit - zu einem von einer zweiten Einheit zu bearbeitenden Auftrag anhand von Steuerungsparametern für eine Auftragsbearbeitung durch die zweite Einheit,
- einer Einrichtung zur abrufbaren Bereitstellung der Auftragsinformation in einem Auftragsspeicher für die zweite Einheit,
- die Auftragsinformation zumindest einen Aufgabendeskriptor, einen Ereignis- und/oder Statusindikator, einen vorgegebenen Erledigungszeitpunkt und eine Angabe über dem zu bearbeitenden Auftrag zugeordnete Ressourcen umfaßt,
- einer Einheit zur fortlaufenden Protokollierung von Veränderungen des Ereignis- und/oder Statusindikators.
